# EUROPÄISCHE PATENTSCHRIFT

(11) **EP 2 616 915 B1**
(45) Veröffentlichungstag und Bekanntmachung des Hinweises auf die Patenterteilung: **09.10.2019**
(21) Anmeldenummer: 11761472.7
(22) Anmeldetag: 13.09.2011
(51) Int. Cl.: G06F 3/0485, G06F 3/0484, G06F 3/0486, G06F 3/0488

(54) **VORRICHTUNG ZUR KONFIGURATION EINER GRAFISCHEN BENUTZERSCHNITTSTELLE**
DEVICE FOR CONFIGURING A GRAPHICAL USER INTERFACE
DISPOSITIF POUR CONFIGURER UNE INTERFACE UTILISATEUR GRAPHIQUE IMPLEMENTEE PAR ORDINATEUR

(30) Priorität: 15.09.2010 CH 14822010
(43) Veröffentlichungstag der Anmeldung: 24.07.2013
(73) Patentinhaber: Ferag AG, 8340 Hinwil (CH)
(72) Erfinder: MÖCKLI, Jürg, CH-8344 Bäretswil (CH); GROTH, Uwe, CH-8340 Hinwil (CH)
(74) Vertreter: Rentsch Partner AG
(86) Internationale Anmeldenummer: PCT/CH2011/000214
(87) Internationale Veröffentlichungsnummer: WO 2012/034244

(56) Entgegenhaltungen:
- US-A1- 2003 210 285
- US-A1- 2009 217 177
- KLAUSER W ET AL: "Linux X User's Guide", INTERNET CITATION, 31. Dezember 2000 (2000-12-31), XP002662292, ISBN: 1-56592-652-8 Gefunden im Internet: URL:http://www.klauser.ch/lxug/ch09.pdf [gefunden am 2011-11-04]
- DOERFLINGER D ET AL: "The KPager Handbook", INTERNET CITATION, 30. August 2008 (2008-08-30), XP002662293, Gefunden im Internet: URL:http://wayback.archive.org/web/*/http: //docs.kde.org/development/en/extragear-ut ils/kpager/kpager.pdf [gefunden am 2011-11-04]

## Beschreibung

### Technisches Gebiet

Die vorliegende Erfindung betrifft ein computerimplementiertes Verfahren zur Konfiguration einer grafischen Benutzerschnittstelle. Die vorliegende Erfindung betrifft insbesondere ein computerimplementiertes Verfahren und Vorrichtungen zur Konfiguration einer grafischen Benutzerschnittstelle für Anzeigen verschiedener Endgeräte.

### Stand der Technik

Grafische Benutzerschnittstellen haben sich in den letzten Jahrzehnten parallel mit der Entwicklung von kostengünstigeren und hochauflösenderen Anzeigen ständig verbessert und ihre Anwendung hat sich ausgehend vom Informationstechnologie- und Informationsverarbeitungsbereich in beinahe sämtlichen Gebieten der Technik verbreitet, insbesondere auch in der Telekommunikation, in der Unterhaltungselektronik und in industriellen Produktions- und Verarbeitungsanlagen. In der Industrie setzen sich für die Bedienung von Maschinen zunehmend grafische Bedienoberflächen durch, die auf einer berührungsempfindlichen Anzeige dargestellt werden, d.h. auf einem berührungsempfindlichen Bildschirm oder "Touch Screen" für die Wiedergabe (Output) und Eingabe (Input) von Daten und Instruktionen. Dies nicht zuletzt deshalb, weil derartige berührungsempfindliche Anzeigen eine flexiblere und kostengünstigere Anpassung ermöglichen, als beispielsweise Mensch-Maschine-Schnittstellen mit elektromechanischen Bedienelementen, wie herkömmliche Tasten, Tastaturen oder bewegbare Computermäuse.

WO07025396A hat eine graphische Benutzerschnittstelle zum Gegenstand, welche sowohl aus einem Touchscreen als auch aus mechanischen Tasten und Drehschaltern besteht. Es wird ein Verfahren und eine Vorrichtung zur Steuerung von Abläufen einer oder mehrerer Maschinen mit einer Bedieneinheit, ausgebildet als Mensch-Maschinen-Interface, offenbart. Die Abläufe und Parameter werden an der Bedienoberfläche der Bedieneinheit durch den Benutzer bildschirmunterstützt mittels Eingabestellen programmiert und auch operativ verändert. Die Bedieneroberfläche wird auf zwei Bedienfelder aufgeteilt. Das erste Bedienfeld weist einen relativ grossen Bildschirm auf und dient neben der Visualisierung von Betriebszuständen, Tabellen, Listen, usw. vor allem auch der Ablaufprogrammierung. Das zweite Bedienfeld dient als eine zentrale Funktion für operative Eingriffe. Beide Bedienfelder sind für einen Datenaustausch in beiden Richtungen ausgebildet.

DE112005001152 beschreibt ein Verfahren zum Abrufen und Anzeigen technischer Daten für eine Industrieeinrichtung. Gegenstand von DE112005001152 ist ein Verfahren um eine Benutzerschnittstelle auf einem mobilen Computer mit relativ kleinen Anzeige- und Eingabevorrichtungen auf eine grösseres Terminal, welches mit einer Industrieeinrichtung verbunden ist, zu übertragen. Sobald sich ein Benutzer, welcher z.B. einen tragbaren PDA (Personal Digital Assistent) bedient, dem grossen Bildschirm der Industrieeinrichtung nähert, wird durch eine drahtlose Einrichtung in der Nähe des grossen Bildschirms eine im PDA integrierte drahtlose Einrichtung erkannt und eine Verbindung wird aufgebaut. Der Benutzer kann anschliessend das entsprechende Terminal markieren und auswählen. Der grosse Bildschirm zeigt z.B. eine Kopie der gleichen Anzeige wie auf dem PDA des Benutzers. Durch das Bereitstellen mehrer Instanzen einer graphischen Benutzerschnittstelle können auf diese Weise schnell Parameter einer speziellen Maschine abgefragt und manipuliert werden.

EP1156437A2 hat ein System und Verfahren zur Überwachung eines Druckproduktions-Workflows zum Gegenstand. Das System umfasst Workflow-Management-Software, die die Verfahrensschritte des Workflows, nämlich den Auftragsbeginn, den Auftragseingang, die Auftragsbearbeitung, die Druckproduktion und die Auftragsvollendung überwacht und erleichtert. Die Workflow-Management-Software umfasst eine integrierte objektorientierte Schnittstelle, die den Workflow visuell darstellt und mittels derer in den Workflow eingegriffen werden kann. Ausserdem bietet die Software die Funktionalität, zusammengesetzte Dokumente als geordnete Sammlungen von Dokumenten zu erstellen, zu bearbeiten und zu verändern. Die Workflow-Management-Software ermöglicht z.B. Ausschneide-, Kopier-, Einfüge-, Verschiebe-Aktionen auf einer Seite oder auf mehreren Seiten eines Dokuments. Diese Funktionalität wird vorzugsweise mittels Pull-down-Menüs, eingeblendeten Dialogfenstern, Optionsleisten oder Symbole erreicht. Ausserdem werden die Ergebnisse der Aktionen in einer visuellen Darstellung des Dokuments auf dem Display der Bearbeitungsstation angezeigt. Display-Fenster dienen der intuitiven visuellen Darstellung der Arbeit, die an einer Bearbeitungsstation geleistet werden muss.

In DE102008001665A werden Verfahren zur Generierung von einheitlichen Benutzeroberflächen für die Steuerung von Textilmaschinen beschrieben. Neben Basisanwendungsprogrammen werden häufig Zusatzanwendungsprogramme mit Zusatzfunktionalitäten implementiert, die in aller Regel von unterschiedlichen Programmierern erstellt werden und Benutzeroberflächen gemäss unterschiedlichen Bedienphilosophien mit unterschiedlichen Erscheinungsbildern aufweisen. Dies führt zu einem hohen Schulungsaufwand für die Bediener sowie zu einer erhöhten Gefahr von Fehlbedienungen. Zudem steigt der Zeitaufwand für die Bedienung während des Einsatzes der Textilmaschine. Um dies zu vermeiden wird in DE102008001665A die Verwendung eines unabhängigen Graphikprogrammmoduls vorgeschlagen, in dem Darstellungselemente bzw. Darstellungsroutinen abgelegt werden. Somit kann ein Zusatzanwendungsprogramm weitgehend unabhängig vom Basisanwendungsprogramm entwickelt werden und der Bediener findet automatisch ein einheitliches Erscheinungsbild mit einer einheitlichen Bedienphilosophie vor, sowohl im Basisanwendungsbereich also auch im Zusatzanwendungsbereich. DE102008001665A unterstützt somit einen Hersteller von Textilmaschinensteuerungen bei der Entwicklung von Benutzeroberflächen, die für Basisanwendungen und ihre Zusatzfunktionen einheitlich sind.

Für die Bedienung von Maschinen in der Industrie, insbesondere Maschinen in der Druck- und Druckproduktweiterverarbeitungsindustrie, werden hinsichtlich Konfiguration, Steuerung, Überwachung, Wartung sowie Aufbereitung und Darstellung von betriebswirtschaftlichen und operationellen Informationen Benutzerschnittstellen benötigt für unterschiedlichste Geschäftsbereiche, Maschinentypen, Funktionen, Benutzer und Benutzerberechtigungen, sowohl auf der Leitebene mit mehreren miteinander verbundenen Maschinen, als auch auf der Ebene von einzelnen Maschinen oder auf der Stationsebene mit Teilen von einzelnen Maschinen. In der Regel werden proprietäre Benutzschnittstellen der Hersteller der Maschinen eingesetzt, was insgesamt zu uneinheitlichen Bedienoberflächen führt, wenn Maschinen und/oder Stationen von unterschiedlichen Herstellern und/oder Maschinengenerationen kombiniert eingesetzt werden. Hinsichtlich effizienter Ausbildung, Benutzung, Entwicklung und Anpassung sind jedoch möglichst einheitliche grafische Bedienoberflächen gewünscht, die zurzeit im Stand der Technik nicht verfügbar sind.

Des Weiteren besteht die Anforderung, dass die Bedienendgeräte für die grafischen Bedienoberflächen kostengünstig und im industriellen Umfeld an oder bei den jeweiligen Maschinen oder Maschinenkomponenten angeordnet bzw. angebracht werden können. Oftmals bestehen dabei Dimensionsbeschränkungen, da im industriellen Umfeld verschiedene logistische, sicherheitsbezogene oder operative Rahmenbedingungen einzuhalten sind. Derartige Rahmenbedingungen führen regelmässig dazu, dass die Bedienoberflächen insbesondere im Produktionsbereich auf kleine Anzeigen mit Bildschirmgrössen von 5 bis 15 Zoll begrenzt sind. Andererseits werden für übergeordnete Planungs-, Konfigurations-, Überwachungs- und Steuerungsfunktionen einer gesamten Produktions- respektive Verarbeitungsanlage und vereinzelt auch bei speziellen Maschinen oder Stationen der Anlage Benutzeroberflächen mit viel grösserer Dimensionierung benötigt.

Es bestehen somit für grafische Benutzerschnittstellen, insbesondere für die Bedienung industrieller Produktions- und Verarbeitungsanlagen, sich teilweise widersprechende und miteinander kollidierende Anforderungen. Einerseits werden für die Bedienung der selben Anlage Bedienendgeräte mit unterschiedlich grossen Anzeigen und unterschiedlich dimensionierten Bedienoberflächen eingesetzt, andererseits sollen die Benutzerschnittstellen aber einheitlich und einfach benutzbar sein.

### Darstellung der Erfindung

Es ist eine Aufgabe der vorliegenden Erfindung ein computerimplementiertes Verfahren und Vorrichtungen zur Konfiguration einer grafischen Benutzerschnittstelle für Anzeigen verschiedener Endgeräte bereitzustellen, welche zumindest einige Nachteile des Stands der Technik nicht aufweisen und welche insbesondere geeignet sind, eine grafische Benutzerschnittstelle für Endgeräte mit unterschiedlich grossen Anzeigen und Bedienoberflächen zu konfigurieren.

Die Aufgabe wird durch die Merkmale der unabhängigen Ansprüche gelöst. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zum Konfigurieren einer grafischen Benutzerschnittstelle für Anzeigen verschiedener Endgeräte, eine grafische Konfigurationsschnittstelle dargestellt wird, welche eine miniaturisierte Darstellung einer Arbeitsfläche für die grafische Benutzerschnittstelle umfasst, dass Konfigurationsinstruktionen entgegengenommen werden zum Selektieren von Widgets und zum Anordnen der Widgets in der Arbeitsfläche durch Positionieren von miniaturisierten Darstellungen der Widgets in der miniaturisiert dargestellten Arbeitsfläche, dass Konfigurationsinstruktionen entgegengenommen werden zum selektiven Zuordnen zu den Endgeräten von jeweils einem oder mehreren definierten Teilen der Arbeitsfläche, und dass die grafische Benutzerschnittstelle, zum Darstellen auf einer Anzeige von jeweils einem der Endgeräte, basierend auf den für das betreffende Endgerät zugeordneten Teilen der Arbeitsfläche und der darin angeordneten Widgets definiert wird.

Vorzugsweise wird die grafische Benutzerschnittstelle mit einem Informationsbereich zum Darstellen eines Ausschnitts der jeweils dem betreffenden Endgerät zugewiesenen aneinandergrenzend angeordneten Teile der Arbeitsfläche, und mit einem im Vergleich zum Informationsbereich wesentlich kleineren ausserhalb des Informationsbereichs angeordneten Navigationsbereich generiert, wobei der Navigationsbereich jeweils eine miniaturisierte Darstellung der Arbeitsfläche mit sämtlichen dem betreffenden Endgerät zugewiesenen Teilen und den darauf angeordneten Widgets umfasst, und wobei der Navigationsbereich und der Informationsbereich über einen im Navigationsbereich bewegbaren Auswahlindikator so gekoppelt werden, dass ein im Navigationsbereich durch den Auswahlindikator bestimmter Auswahlbereich der miniaturisiert dargestellten Arbeitsfläche dem im Informationsbereich dargestellten Ausschnitt der Arbeitsfläche entspricht.

In einer Ausführungsvariante wird der Navigationsbereich mit mehreren voneinander getrennten Navigationsteilbereichen generiert, welche jeweils eine miniaturisierte Darstellung von einem der dem betreffenden Endgerät zugewiesenen Teilen der Arbeitsfläche und den darauf angeordneten Widgets aufweisen, wobei die Navigationsteilbereiche so generiert werden, dass miniaturisiert dargestellte Widgets durch den Benutzer von einem der Navigationsteilbereiche in einen anderen der Navigationsteilbereiche bewegbar sind, und dass die Navigationsteilbereiche und der Informationsbereich so gekoppelt werden, dass eine Positionierung eines miniaturisierten Widgets auf der miniaturisierten Darstellung eines der Teile der Arbeitsfläche eine entsprechende Positionierung des betreffenden Widgets auf dem betreffenden Teil der Arbeitsfläche in den Endgeräten bewirkt, denen der betreffende Teil zugeordnet ist.

In einer weiteren Ausführungsvariante werden die Navigationsteilbereiche so gekoppelt, dass bei einer Bewegung eines Widgets durch den Benutzer von einem der Navigationsteilbereiche in einen anderen der Navigationsteilbereiche die Zulässigkeit der Positionierung des Widgets im anderen der Navigationsteilbereiche, beispielsweise gemäss gespeicherten Regeln, überprüft wird, und die Bewegung des Widgets zurückgewiesen wird, wenn die Zulässigkeit der Positionierung nicht gegeben ist.

In einer Ausführungsvariante ist ein erster Navigationsteilbereich als Vorbereitungsbereich zum Definieren einer Produktionskonfiguration eines Druckproduktionssystems oder Druckproduktweiterverarbeitungssystems vorgesehen, ein zweiter Navigationsteilbereich ist als Produktionsbereich zur Überwachung und Steuerung einer Herstellung oder Weiterverarbeitung von Druckprodukten im Druckproduktionssystem respektive Druckproduktweiterverarbeitungssystem vorgesehen, und ein dritter Navigationsteilbereich ist als Verteilungsbereich zum Definieren der Auslieferung der Druckprodukte des Druckproduktionssystems respektive Druckproduktweiterverarbeitungssystems vorgesehen. In einer Variante ist ein vierter Navigationsteilbereich als Auswertungsbereich für statistische Funktionen und Reportingfunktionen vorgesehen.

In einer weiteren Ausführungsvariante werden Konfigurationsinstruktionen zum Definieren der Teile der Arbeitsfläche entgegengenommen und ein Teil ist jeweils für die Endgeräte gekoppelt oder entkoppelt definierbar, wobei ein gekoppelt definierter Teil der Arbeitsfläche so generiert wird, dass er Änderungen im betreffenden Teil in den anderen Endgeräten repliziert, denen der betreffende Teil zugeordnet ist, und wobei ein entkoppelt definierter Teil so generiert wird, dass er Änderungen im betreffenden Teil nicht in den anderen Endgeräte repliziert.

In einer Ausführungsvariante wird die Benutzerschnittstelle mit einer Kopierfunktion generiert, wobei die Kopierfunktion eingerichtet ist, in einem benutzergesetzten Kopiermodus beim Bewegen eines miniaturisierten Widgets vom Navigationsbereich in den Informationsbereich eine Kopie des Widgets zu erstellen und auf einem Teil der Arbeitsfläche in denjenigen Endgeräten anzuordnen, denen der betreffende Teil zugeordnet ist.

In einer weiteren Ausführungsvariante werden Konfigurationsinstruktionen zum Zuweisen von Schnellzugriffselementen zu den Endgeräten entgegengenommen. Die Benutzerschnittstelle wird für ein Endgerät jeweils mit zugewiesenen Schnellzugriffselementen generiert, welche bei einer Betätigung durch den Benutzer bewirken, dass im Informationsbereich ein dem betreffenden Schnellzugriffselement zugeordneter definierter Bereich der Arbeitsfläche und der darauf angeordneten Widgets dargestellt wird, und der Auswahlindikator im Navigationsbereich den entsprechenden Auswahlbereich der miniaturisiert dargestellten Arbeitsfläche und der entsprechenden darauf angeordneten miniaturisierten Widgets anzeigt.

In einer Ausführungsvariante wird die grafische Benutzerschnittstelle mit einem Login-Bereich generiert, wobei der Login-Bereich, der Informationsbereich und der Navigationsbereich so gekoppelt werden, dass die Widgets benutzerspezifisch gemäss gespeicherten Benutzereinstellungen, gruppenspezifisch gemäss gespeicherten Gruppeneinstellungen, und generisch gemäss gespeicherten Grundeinstellungen auf der Arbeitsfläche angeordnet und im Informationsbereich und Navigationsbereich dargestellt werden.

In einer weiteren Ausführungsvariante wird die grafische Benutzerschnittstelle für ein Endgerät jeweils mit einem Widget-Inventar generiert, wobei das Widget-Inventar eine Darstellung von verfügbaren aber ausschliesslich zur Zeit inaktiven, nicht auf den dem betreffenden Endgerät zugeordneten Teilen der Arbeitsfläche angeordneten Widgets umfasst, und wobei die Arbeitsfläche und das Widget-Inventar so gekoppelt werden, dass ein aktives Widget durch den Benutzer von den dem betreffenden Endgerät zugeordneten Teilen der Arbeitsfläche in das Widget-Inventar bewegbar ist und dabei inaktiv wird, und dass ein inaktives Widget durch den Benutzer vom Widget-Inventar auf einen dem betreffenden Endgerät zugeordneten Teil der Arbeitsfläche bewegbar ist und dabei aktiv wird.

Neben dem computerimplementierten Verfahren zum Konfigurieren einer grafischen Benutzerschnittstelle für Anzeigen verschiedener Endgeräte, bezieht sich die vorliegende Erfindung zudem auf eine computerisierte Vorrichtung mit einem Konfigurationsmodul zum Konfigurieren der grafischen Benutzerschnittstelle für verschiedene Endgeräte. Die vorliegende Erfindung bezieht sich zudem auf ein Computerprogrammprodukt, insbesondere ein computerlesbares Medium mit darauf gespeichertem Computercode, zur Steuerung eines Prozessors derart, dass der Prozessor das Verfahren durchführt zum Konfigurieren der grafischen Benutzerschnittstelle für verschiedene Endgeräte.

In einem weiteren Aspekt der vorliegenden Erfindung umfasst eine computerimplementierte grafische Benutzerschnittstelle für eine Anzeige einen Informationsbereich zum Darstellen eines Ausschnitts einer Arbeitsfläche und einen im Vergleich zum Informationsbereich wesentlich kleineren ausserhalb des Informationsbereichs angeordneten Navigationsbereich, wobei auf der Arbeitsfläche eines oder mehrere Widgets angeordnet sind und der Navigationsbereich eine miniaturisierte Darstellung der gesamten Arbeitsfläche und der darauf angeordneten Widgets aufweist, und wobei der Navigationsbereich und der Informationsbereich über einen im Navigationsbereich bewegbaren Auswahlindikator so gekoppelt sind, dass ein im Navigationsbereich durch den Auswahlindikator bestimmter Teilbereich der miniaturisiert dargestellten Arbeitsfläche dem im Informationsbereich dargestellten Ausschnitt der Arbeitsfläche entspricht.

Vorzugsweise sind die miniaturisiert dargestellten Widgets im Navigationsbereich durch den Benutzer auf der miniaturisierten Arbeitsfläche bewegbar, und der Navigationsbereich und der Informationsbereich sind so gekoppelt, dass eine Positionierung eines miniaturisierten Widgets auf der miniaturisierten Arbeitsfläche des Navigationsbereichs eine entsprechende Positionierung des betreffenden Widgets auf der Arbeitsfläche bewirkt.

In einer Ausführungsvariante sind die Widgets durch den Benutzer vom Informationsbereich auf die miniaturisiert dargestellte Arbeitsfläche im Navigationsbereich bewegbar, wobei die bewegten Widgets im Navigationsbereich jeweils miniaturisiert dargestellt werden, und der Navigationsbereich und der Informationsbereich sind so gekoppelt, dass die Positionierung der miniaturisierten Widgets auf der miniaturisierten Arbeitsfläche des Navigationsbereichs jeweils eine entsprechende Positionierung des betreffenden Widgets auf der Arbeitsfläche bewirkt.

In einer weiteren Ausführungsvariante sind die Widgets auf der Arbeitsfläche so gekoppelt, dass bei einer Überlappung eines benutzerpositionierten Widgets mit einem anderen Widget auf der Arbeitsfläche und/oder bei einer Überlappung eines benutzerpositionierten miniaturisierten Widgets mit einem anderen auf der miniaturisierten Arbeitsfläche angeordneten miniaturisierten Widget eine nicht überlappende Anordnung der Widgets respektive der miniaturisierten Widgets erzeugt wird, wobei der Navigationsbereich und der Informationsbereich so gekoppelt sind, dass die nicht überlappende Anordnung der Widgets eine entsprechende Anordnung der miniaturisierten Widgets auf der miniaturisierten Arbeitsfläche, respektive die nicht überlappende Anordnung der miniaturisierten Widgets eine entsprechende Anordnung der Widgets auf der Arbeitsfläche bewirkt.

In einer Ausführungsvariante umfasst der Navigationsbereich mehrere voneinander getrennte Navigationsteilbereiche, welche jeweils eine miniaturisierte Darstellung von einem von mehreren aneinandergrenzenden Teilen der Arbeitsfläche und den darauf angeordneten Widgets aufweisen. Die Widgets sind durch den Benutzer von einem der Navigationsteilbereiche in einen anderen der Navigationsteilbereiche bewegbar, wobei die Navigationsteilbereiche und der Informationsbereich so gekoppelt sind, dass eine Positionierung eines miniaturisierten Widgets auf der miniaturisierten Darstellung des betreffenden Teils der Arbeitsfläche eine entsprechende Positionierung des entsprechenden Widgets auf der Arbeitsfläche bewirkt.

In einer weiteren Ausführungsvariante sind die Widgets und die Navigationsteilbereiche so gekoppelt, dass bei einer Bewegung eines Widgets durch den Benutzer von einem der Navigationsteilbereiche in einen anderen der Navigationsteilbereiche die Zulässigkeit der Positionierung des Widgets im anderen der Navigationsteilbereiche, beispielsweise gemäss gespeicherten Regeln, überprüft wird, und die Bewegung des Widgets zurückgewiesen wird, wenn die Zulässigkeit der Positionierung nicht gegeben ist.

In einer Ausführungsvariante ist der Auswahlindikator über die Navigationsteilbereiche hinweg bewegbar, wobei der Auswahlindikator bei einer Positionierung über einem Grenzbereich zwischen zwei Navigationsteilbereichen im Informationsbereich eine Darstellung der entsprechenden zwei aneinandergrenzenden Teile und der darauf angeordneten Widgets der Arbeitsfläche bewirkt.

In einer Ausführungsvariante ist vom Benutzer ein Kopiermodus setzbar, und der Navigationsbereich und die Widgets sind so gekoppelt, dass im Kopiermodus beim Bewegen eines miniaturisierten Widgets vom Navigationsbereich in den Informationsbereich, vom betreffenden Widget eine Kopie erstellt und auf der Arbeitsfläche angeordnet wird.

In einer weiteren Ausführungsvariante sind die Widgets im Informationsbereich durch den Benutzer in ihrer Dimensionierung veränderbar, und der Navigationsbereich und der Informationsbereich sind so gekoppelt, dass eine Veränderung der Dimensionierung eines Widgets im Informationsbereich jeweils eine entsprechende Veränderung des betreffenden miniaturisierten Widgets im Navigationsbereich bewirkt.

In einer Ausführungsvariante sind die Widgets mit einem Schnittstellenmodul gekoppelt, welches eingerichtet ist, benutzerdefinierte Änderungen und/oder Positionierungen von Widgets in einem Benutzerprofil zu speichern, und bei einem Login des Benutzers die Widgets gemäss dem Benutzerprofil auf der Arbeitsfläche zu positionieren und entsprechend im Informationsbereich respektive im Navigationsbereich darzustellen.

In einer weiteren Ausführungsvariante sind der Navigationsbereich und die Widgets so gekoppelt, dass bei einer Positionierung eines miniaturisierten Widgets im Navigationsbereich die miniaturisierte Darstellung der Widgets bei Platzmangel skaliert wird, um eine nichtüberlappende Darstellung sämtlicher miniaturisierter Widgets innerhalb des Navigationsbereichs zu gewährleisten.

In einer Ausführungsvariante umfasst die Benutzerschnittstelle Schnellzugriffselemente, welche jeweils bei einer Betätigung durch den Benutzer bewirken, dass im Informationsbereich ein vom Benutzer dem betreffenden Schnellzugriffselement zugeordnetes Widget dargestellt wird, und dass der Auswahlindikator im Navigationsbereich den entsprechenden Teilbereich der miniaturisiert dargestellten Arbeitsfläche mit dem darauf angeordneten betreffenden miniaturisierten Widget anzeigt.

In einem weiteren Aspekt der vorliegenden Erfindung umfasst die computerimplementierte grafische Benutzerschnittstelle eine Arbeitsfläche und mehrere auf der Arbeitsfläche für den Benutzer sichtbar angeordnete Widgets, wobei Ausgangs-Widgets jeweils eines oder mehrere Inhaltsfenster mit Datenelementen umfassen, und wobei die Widgets und die Inhaltsfenster so gekoppelt sind, dass ein Inhaltsfenster und/oder darin selektierte Datenelemente durch den Benutzer aus einem Ausgangs-Widget, in dem sie angeordnet sind, zur Verarbeitung in eines von mehreren möglichen, für den Benutzer sichtbaren Ziel-Widgets bewegbar sind.

In einer Ausführungsvariante sind die Widgets und die Inhaltsfenster so gekoppelt, dass ein Inhaltsfenster und/oder darin selektierte Datenelemente durch den Benutzer, ohne Platzierung auf der Arbeitsfläche, aus dem betreffenden Ausgangs-Widget herausziehbar sind, wobei die möglichen Ziel-Widgets, durch welche das betreffende Inhaltsfenster respektive die selektierten Datenelemente verarbeitbar sind, dem Benutzer angezeigt werden.

In einer weiteren Ausführungsvariante ist eines der Ziel-Widgets eingerichtet, von einem Inhaltsfenster respektive von selektierten Datenelementen, die im Ziel-Widget positioniert werden, eine Kopie zu erstellen und sich mit der Kopie des Inhaltsfensters respektive der selektierten Datenelemente auf der Arbeitsfläche anzuordnen.

In einer weiteren Ausführungsvariante sind die Widgets und die Inhaltsfenster so gekoppelt, dass die Ziel-Widgets dachziegelartig hintereinander gestapelt angezeigt werden, wobei abwechselnd jeweils eines der Ziel-Widgets im Stapel zuvorderst angezeigt wird, bis das betreffende Inhaltsfenster respektive die selektierten Datenelemente im aktuell zuvorderst angezeigten Ziel-Widget oder wieder im Ausgangs-Widget platziert werden.

In einer Ausführungsvariante umfasst die Benutzerschnittstelle einen Informationsbereich zum Darstellen eines Ausschnitts der Arbeitsfläche, und einen im Vergleich zum Informationsbereich wesentlich kleineren ausserhalb des Informationsbereichs angeordneten Navigationsbereich mit einer miniaturisierten Darstellung der gesamten Arbeitsfläche und der darauf angeordneten Widgets, wobei der Navigationsbereich und der Informationsbereich so gekoppelt sind, dass im Navigationsbereich eine miniaturisierte Darstellung des Ziel-Widgets, in welches das betreffende Inhaltsfenster respektive die selektierten Datenelemente platziert wurden, für den Benutzer markiert wird.

In einer Ausführungsvariante umfassen die Widgets jeweils eines oder mehrere Inhaltsfenster, und die Widgets und die Inhaltsfenster sind so gekoppelt, dass ein Inhaltsfenster durch den Benutzer vollständig aus dem betreffenden Widget heraus auf die Arbeitsfläche bewegbar ist, wobei für das aus dem Widget hinausbewegte Inhaltsfenster jeweils ein neues Widget erstellt und das Inhaltsfenster im neu erstellten Widget angeordnet wird.

In einer weiteren Ausführungsvariante sind die Widgets und/oder Inhaltsfenster durch den Benutzer jeweils auf eine Kopfleiste reduzierbar, wobei die Kopfleiste einen Statusindikator zum Anzeigen eines aktuellen, dem betreffenden Widget respektive Inhaltsfenster zugeordneten Statuswerts umfasst.

In einer weiteren Ausführungsvariante umfassen die Widgets jeweils einen oder mehrere sichtbare Indikatoren von anderen, mit dem betreffenden Widget verknüpften Ziel-Widgets, und die Widgets und die Inhaltsfenster sind so gekoppelt, dass ein Inhaltsfenster und/oder darin selektierte Datenelemente durch den Benutzer aus dem Ausgangs-Widget über einen der Indikatoren bewegbar sind, wobei dem Benutzer mögliche Verarbeitungsaktionen des betreffenden Ziel-Widgets dargestellt werden, auf welchen das Inhaltsfenster respektive die selektierten Datenelemente zur entsprechenden Verarbeitung ablegbar sind.

In einer Ausführungsvariante sind die Widgets und die sichtbaren Indikatoren so gekoppelt, dass bei einer Bewegung des Inhaltsfensters respektive der selektierten Datenelemente über einen der Indikatoren das dem Indikator zugeordnete Ziel-Widget neben dem Ausgangs-Widget angezeigt wird, und die möglichen Verarbeitungsaktionen im betreffenden Ziel-Widget grafisch dargestellt werden.

In einer weiteren Ausführungsvariante umfasst die Benutzerschnittstelle eine zweidimensionale Ablagematrix, welche zum Darstellen der möglichen Verarbeitungsaktionen des betreffenden Ziel-Widgets anzeigbar ist und eine Ablage des Inhaltsfensters respektive der selektierten Datenelemente in einer Matrixzelle ermöglicht, zur Verarbeitung des Inhaltsfensters respektive der selektierten Datenelemente durch eine durch die betreffende Matrixzelle bestimmte Verarbeitungsaktion.

In einer weiteren Ausführungsvariante sind die Widgets so gekoppelt, dass mehrere Widgets durch den Benutzer auf der Arbeitsfläche durch Aneinanderreihen so aneinander bindbar sind, dass sie als Einheit auf der Arbeitsfläche bewegbar sind, bis sie vom Benutzer wieder voneinander getrennt werden.

In einer Ausführungsvariante umfasst die Benutzerschnittstelle ein Widget-Inventar mit einer Darstellung von verfügbaren aber ausschliesslich zur Zeit inaktiven, nicht auf der Arbeitsfläche angeordneten Widgets, wobei die Arbeitsfläche und das Widget-Inventar so gekoppelt sind, dass ein aktives Widget durch den Benutzer von der Arbeitsfläche in das Widget-Inventar bewegbar ist und dabei inaktiv wird, und dass ein inaktives Widget durch den Benutzer vom Widget-Inventar auf die Arbeitsfläche bewegbar ist und dabei aktiv wird.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt ein Blockdiagram einer Produktionsanlage mit mehreren Maschinen einer Produktionslinie, einem übergeordneten Linienmaster und mehreren Endgeräten mit Anzeigen zum Bedienen der Produktionsanlage.
- Figuren 2a, 2b:: zeigen jeweils eine grafische Konfigurationsschnittstelle mit miniaturisierten Darstellungen einer Arbeitsfläche und verschiedener Endgeräte, und einem Eingabebereich zum individuellen Zuordnen von Teilen der Arbeitsfläche zu den Endgeräten.
- Figur 3:: zeigt eine Anzeige mit einer grafischen Benutzerschnittstelle, die einen Navigationsbereich zur miniaturisierten Darstellung einer Arbeitsfläche und darauf angeordneter Widgets, und einen Informationsbereich zur Darstellung eines ausgewählten Ausschnitts der Arbeitsfläche und der darin angeordneten Widgets ausweist.
- Figuren 4a, 4b:: zeigen jeweils die grafische Benutzerschnittstelle mit einem unterschiedlichen Ausschnitt der Arbeitsfläche im Informationsbereich und einem im Navigationsbereich entsprechend positionierten Auswahlindikator.
- Figur 5:: illustriert in der Benutzerschnittstelle schematisch wie die Verschiebung eines miniaturisierten Widgets im Navigationsbereich eine entsprechende Positionierung des betreffenden Widgets auf der Arbeitsfläche bewirkt.
- Figur 6:: illustriert in der Benutzerschnittstelle schematisch Verschiebungen eines Widgets im Informationsbereich, wobei ein Widget durch Verschieben vom Informationsbereich in den Navigationsbereich auf der gesamten Arbeitsfläche positionierbar ist.
- Figur 7:: illustriert in der Benutzerschnittstelle schematisch die Verschiebung eines Widgets vom Navigationsbereich in den Informationsbereich, wobei im Ausschnitt der Arbeitsfläche, der im Informationsbereich dargestellt ist, bei gesetztem Kopiermodus eine Kopie des Widgets vom Navigationsbereich erzeugt wird.
- Figur 8:: illustriert in der Benutzerschnittstelle schematisch eine Neuanordnung von Widgets, bei einer Verschiebungen eines Widgets vom Informationsbereich in den Navigationsbereich an eine Stelle zwischen zwei Widgets.
- Figuren 9a, 9b:: illustrieren in der Benutzerschnittstelle schematisch eine Neuanordnung von Widgets, bei einer Vergrösserung eines Widgets im Informationsbereich, die eine Verdrängung, d.h. Umpositionierung, anderer Widgets bewirkt.
- Figur 10:: illustriert in der Benutzerschnittstelle schematisch die Darstellung von Widgets mit Inhaltsfenstern und die Erzeugung eines Widgets mit einem Inhaltsfenster, das aus einem bestehenden Widget herausgezogen wird.
- Figur 11:: illustriert in der Benutzerschnittstelle schematisch eine Neuanordnung von Inhaltsfenstern in einem Widget, bei einer Formveränderung des betreffenden Widgets.
- Figuren 12a, 12b:: illustrieren schematisch die Anordnung und Skalierung eines Navigationsteilbereichs bei einer Verschiebung eines miniaturisiert dargestellten Widgets im betreffenden Teilbereich an eine Stelle mit ungenügend Platz für das Widget.
- Figuren 13a, 13b:: illustrieren schematisch die Auflösung eines Navigationsteilbereichs bei einer Verschiebung des einzigen im betreffenden Teilbereich vorhandenen Widgets in einen anderen Navigationsteilbereich.
- Figuren 14a, 14b:: illustrieren schematisch die Bewegung eines Inhaltsfensters oder darin selektierter Datenelemente von einem Ausgangs-Widget in ein Ziel-Widget zur Verarbeitung, wobei mögliche, verknüpfbare Ziel-Widgets kaskadiert zur Auswahl dargestellt werden.
- Figuren 15a-16c:: illustrieren schematisch die Bewegung eines Inhaltsfensters oder darin selektierter Datenelemente von einem Ausgangs-Widget in ein Ziel-Widget zur Verarbeitung, wobei eine auszuführende Verarbeitungsaktion durch Ablage auf ein Symbol oder eine Zelle einer Ablagematrix bestimmt wird.
- Figuren 17a, 17b:: illustrieren skalierbare Zeitleisten mit darin angezeigten Produktionsaufträgen und ihren jeweiligen Produktionsverläufen.
- Figuren 18a-18d:: illustrieren Inhaltsfenster mit verschiebbarem ("scrollable") Inhaltsbereich, der angezeigt wird, wobei die Bereichsgrenzen innerhalb derer der Inhaltsbereich verschiebbar ist, über verschiebbare Reiter variabel einstellbar ist.

### Wege zur Ausführung der Erfindung

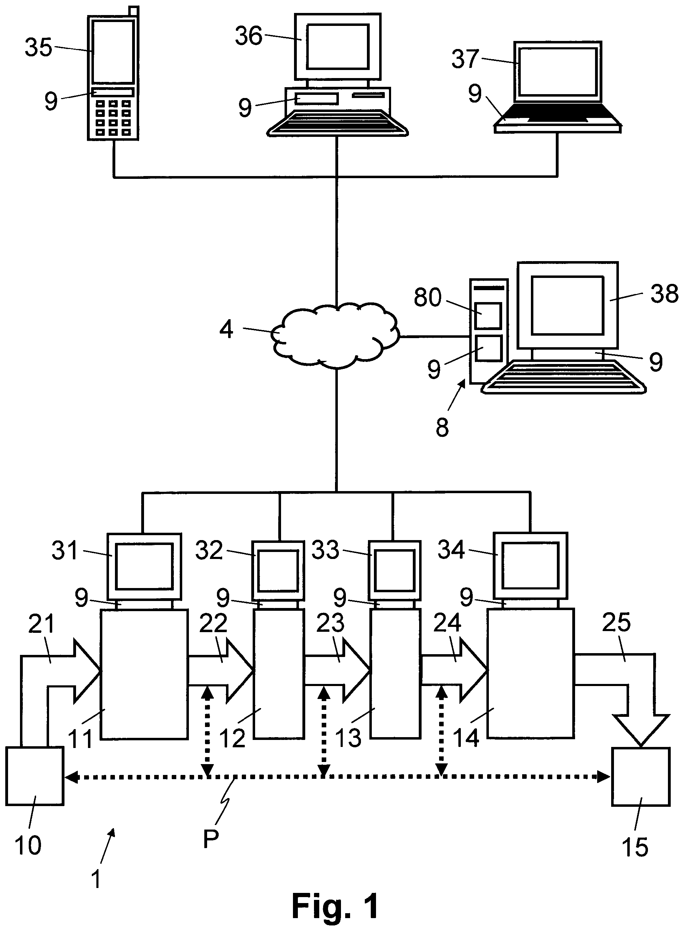

In der Figur 1 bezieht sich das Bezugszeichen 1 auf eine Produktionsanlage im grafischen Druckproduktionsbereich, in der Druckprodukt weiterverarbeitenden Industrie und/oder im Bereich Logistik und Transport. Die in Figur 1 schematisch dargestellte Produktionsanlage 1 umfasst mehrere Maschinen 10, 11, 12, 13, 14, 15 einer (oder mehrerer) Produktionslinie(n), die über Förderer 21, 22, 23, 24, 25 miteinander verbunden sind. Die Produktionsanlage 1 umfasst insbesondere Maschinen und Förderer, z.B. mit Förderketten und/oder Förderbändern, für Druckproduktionssysteme (wie sog. Rotationen) und Druckproduktweiterverarbeitungssysteme, umfassend Druckmaschinen, Sammelanlagen zum Sammeln (im weiteren Sinne) bzw. Kollektionieren von Produktkollektionen aus mehreren Produkten durch Zusammentragen, Einstecken oder Sammeln (im engeren Sinne), Weiterverarbeitungsanlagen zum Einstecken, Folieren, Heften, Kleben, Schneiden, Verschweissen, Adressieren und/oder Stapeln einschliesslich Anleger, Paketausleger, Stangenanleger, Wickelstationen und Umreifungsmaschinen, sowie Zeitungsversandsysteme, digitale On-Demand-Buchproduktionssystem und Verteilungs- und Versandanlagen ("Mailroom"). Die Produktionsanlage 1 umfasst überdies Maschinenaggregate, die Zusatzfunktionen ("Add-ons") erfüllen, wie beispielsweise Anbringen von Klebeetiketten (z.B. Memostick®) oder Bedrucken im Verarbeitungsfluss und die hier ebenfalls als Maschinen bezeichnet werden. Die Produkte sind insbesondere flächige, flexible Druckprodukte unterschiedlicher Dicke aber auch andere flächige Produkte wie beispielsweise Datenträger oder andere Beilagen. Der Fachmann wird verstehen, dass die Produktionsanlage 1 sehr vereinfacht dargestellt ist und in der Praxis nicht bloss eine sequentielle Anordnung von Maschinen 10-15 und verbindenden Förderern 21-25 umfasst, sondern dass die Produktionsanlage 1 ein flexibel konfigurierbares Fördersystem umfasst und die Maschinen 10-15 und Förderer 21-25 über verschieden konfigurierbare Förderwege für unterschiedlichste Produktionsfälle kombiniert und eingerichtet werden können, wie in der Figur 1 durch die gepunkteten Pfeile P angedeutet ist.

Zur Steuerung der Produktionslinie(n) umfasst die Produktionsanlage 1 einen computerisierten Linienmaster 8, der einen oder mehrere betriebsfähige Computer mit jeweils einem oder mehreren Prozessoren umfasst, beispielsweise ein Server, und mit einem zugeordneten Endgerät 38 verbunden ist, das eine Anzeige umfasst. Der Linienmaster 8 ist über ein Kommunikationssystem 4 mit mehreren weiteren Endgeräten 31, 32, 33, 34, 35, 36, 37 verbunden, die jeweils über eine Anzeige verfügen.

Die Anzeigen der Endgeräte 31-38 sind vorzugsweise berührungsempfindliche Anzeigen ("Touch Screen") für die Darstellung von grafischen Benutzerschnittstellen und die Wiedergabe (Output) und Eingabe (Input) von Daten und Instruktionen. Besonders bevorzugt werden so genannte "Multi-Touch Screens" eingesetzt, welche Manipulation mit mehreren Fingern gleichzeitig ermöglichen. Als berührungsempfindliche Systeme werden z.B. induktive, kapazitive oder druckbezogene Sensortechniken eingesetzt, die besonders auch industriellen Gegebenheiten Rechnung tragen. Berührungsempfindliche Multi-Touch Screens ermöglichen einem Benutzer nicht nur die Eingabe von Daten und Instruktionen sondern auch Manipulationen der Benutzerschnittstelle mittels seiner Finger, beispielsweise Verschieben und Verändern der Grösse und Dimensionierung von Objekten oder Blättern und "Scrollen" in der Benutzerschnittstelle, sowie Konfigurieren der Benutzerschnittstelle.

Wie in der Figur 1 schematisch dargestellt ist, sind die einzelnen Endgeräte 31-34 jeweils direkt bei einer Maschine 11-14 angeordnet und mit ihr verbunden, oder als von den Maschinen 10-15 unabhängige Endgeräte 35-38, beispielsweise frei bewegbar, ausgestaltet. Die Endgeräte 31-38 umfassen einen oder mehrere Prozessoren und sind beispielsweise als Dateneingabe- und Datenausgabeterminal, Personal Computers (PC), industrielle PC-Module, mobile PCs, PDAs (Personal Data Assistants) oder Mobilfunktelefone (Smart Phones) ausgestaltet. Zur Steuerung der Produktionslinie(n) ist der Linienmaster 8 je nach Ausführungsvariante und/oder Konfiguration über das Kommunikationssystem 4 direkt mit den Maschinen 10-15 und Förderern 21, 22, 23, 24, 25 verbunden, oder indirekt über ein Endgerät 31-34, das mit einer Maschine 11-14 verbunden ist. Entsprechend werden Steuer-, Konfigurations- und Abfragedaten und -befehle zwischen dem Linienmaster 8 und den Maschinen 10-15 und Förderern 21-25 der Produktionslinie(n) direkt über das Kommunikationssystem 4, oder via das Kommunikationssystem 4 und die Endgeräte 31-34 ausgetauscht. In ähnlicher Weise werden Benutzerinstruktionen und -daten, die von Benutzern über die Endgeräte 31-38 zur Steuerung, Konfiguration oder Abfrage der Maschinen 10-15 und Förderer 21-25 eingegeben werden, jeweils vom betreffenden Endgerät 31-34 direkt an die damit verbundene Maschine 11-14 übermittelt, direkt über das Kommunikationssystem 4 an eine entfernt angeordnete Maschine 10-15 respektive einen Förderer 21-25 übermittelt, oder indirekt über den Linienmaster 8 an die betreffende Maschine 10-15 respektive den betreffenden Förderer 21-25 geleitet.

Das Kommunikationssystem 4 umfasst je nach Ausführung leiterlose (drahtlose) und/oder leitergebundene (z.B. verdrahtete) Kommunikationsverbindungen respektive Kommunikationsnetze, beispielsweise Lokalnetze (LAN, WLAN), Systembusse und/oder einzelne Direktleitungen.

Vorzugsweise ist die Produktionsanlage 1 so eingerichtet, dass der Linienmaster 8 einen Datenspeicher mit den aktuellen Steuer- und Konfigurationsparameter sowie Statuswerten der Maschinen 10-15 und Förderer 21-25 der Produktionslinie(n) umfasst und auch Daten mit Produktions-, Verteil- und Routenplan für die Produktionslinie(n) aufnehmen und speichern kann. Der Linienmaster 8 umfasst insbesondere einen Datenspeicher mit Konfigurationsdaten für definierte Grundeinstellungen, Gruppeneinstellungen und Benutzereinstellungen der grafischen Benutzerschnittstellen, die zur Bedienung der Produktionsanlage 1 auf den verschiedenen Anzeigen der Endgeräte 31-38 dargestellt werden, wie nachfolgend näher beschrieben wird.

Dabei soll hier festgehalten werden, dass mit dem Ausdruck "Bedienung der Produktionsanlage" die verschiedensten Aktivitäten miteingeschlossen werden für die Konfiguration, Steuerung, Überwachung, Wartung, übergeordnete Produktionsplanung von jeweils einer Maschine, einem Maschinenteil (Station), einem Anlageabschnitt und/oder einer Anlage mit mehreren Maschinen der Produktionslinie(n), und auch die Abfrage, Aufbereitung, Darstellung und Ausgabe von operationellen, betriebstechnischen und betriebswirtschaftlichen Informationen betreffend die Produktionslinie(n) umfasst.

Je nach Ausführungsvariante und Konfiguration sind die Benutzerschnittstellen für die Bedienung und Steuerung der Produktionsanlage 1 in ein programmiertes Produktionsanlagesteuersystem oder in eine oder mehrere programmierte Produktionsanlagesteuerapplikationen eingebettet, die zentralisiert auf dem Linienmaster 8 oder verteilt auf dem Linienmaster 8 und den Endgeräten 31-38 ausgeführt werden. Entsprechend umfasst die Produktionsanlage 1 eines oder mehrere Schnittstellenmodule 9 zur Erzeugung, Darstellung und Steuerung der Benutzerschnittstellen, welche beispielsweise für eine klassische Client/Server-Architektur oder eine Thin-Client-Architektur eingerichtet und im Linienmaster 8 und/oder in den Endgeräten 31-38 angeordnet und ausgeführt werden.

Wie in Figur 1 schematisch dargestellt wird, umfasst der Linienmaster 8 ein Konfigurationsmodul 80 zum Konfigurieren der Benutzerschnittstellen für die Endgeräte 31-38 der Produktionsanlage 1, insbesondere in Abhängigkeit der unterschiedlich dimensionierten spezifischen Anzeigen der Endgeräte 31-38 und/oder der damit verbundenen zu bedienenden Maschine(n) 10-15 respektive Förderer 21-25. Das Konfigurationsmodul 80 ist vorzugsweise als programmiertes Softwaremodul ausgeführt, das Computerprogrammcode zur Steuerung eines oder mehrerer Prozessoren des Linienmasters 8 umfasst. Der Computerprogrammcode ist auf einem fest oder entfernbar mit dem Linienmaster verbundenen computerlesbaren Medium gespeichert. Der Fachmann wird verstehen, dass das Konfigurationsmodul 80 in alternativen Ausführungsformen vollständig oder teilweise mit Hardwarekomponenten ausführbar ist und/oder auf einem oder mehreren anderen Endgeräten 31-38 angeordnet und ausgeführt werden kann.

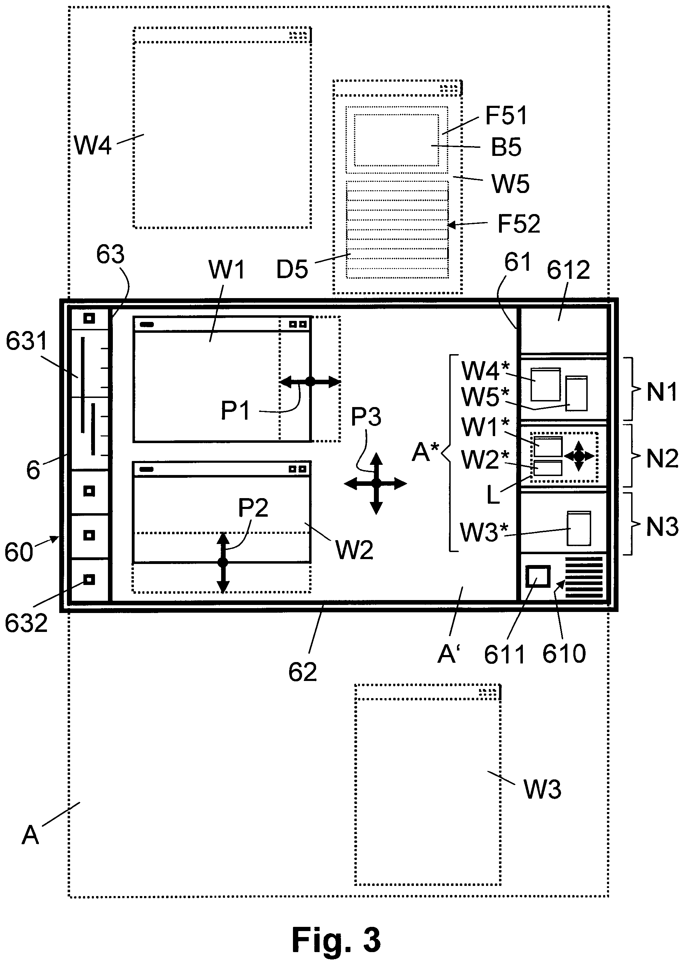

Figur 3 zeigt ein Beispiel einer Anzeige 60 eines der Endgeräte 31-38 mit einer grafischen Benutzerschnittstelle 6 zur Bedienung der Produktionsanlage 1 oder zumindest einer Maschine 10-15, eines Förderers 21-25 oder anderen Teils der Produktionsanlage 1. Wie in der Figur 3 schematisch dargestellt ist, weist die Benutzerschnittstelle 6 einen Navigationsbereich 61, einen Informationsbereich 62 und eine Steuerleiste 63 auf. Im dargestellten Beispiel sind der Navigationsbereich 61 und die Steuerleiste 63 jeweils vertikal ausgerichtet; in alternativen Ausführungen oder Konfigurationen sind sie jedoch auch vertikal ausrichtbar.

Die Steuerleiste 63 umfasst eine skalierbare Zeitleiste 631 und Schnellzugriffselemente 632, welche später näher beschrieben werden.

Der Informationsbereich 62 stellt dem Benutzer einen ausgewählten Ausschnitt A' einer Arbeitsfläche A dar. Die Arbeitsfläche A ist ein virtueller zweidimensionaler Bereich, vergleichbar mit dem "Desktop" bei fensterorientierten Benutzeroberflächen wie beispielsweise Microsoft Windows, Apple MAC OS oder Apple iPhone OS. Die Arbeitsfläche A weist eine Grösse (Breite/Höhe) auf, die diejenige der Anzeige 60 übertrifft, und ist deshalb bei einer gegebenen vollen Bildauflösung nicht vollständig auf der Anzeige 60 darstellbar.

Wie in der Figur 3 ersichtlich ist, sind auf der Arbeitsfläche A mehrere Widgets W1, W2, W3, W4, W5 angeordnet, deren Grösse vom Benutzer in Höhe, Breite und/oder Diagonale über die Benutzerschnittstelle 6 veränderbar ist, beispielsweise durch entsprechende Fingermanipulationen auf der berührungsempfindlichen Anzeige 60, wie durch die Doppelpfeile P1, P2 schematisch angedeutet ist. Die Widgets W1-W5 sind Komponenten eines grafischen Fenstersystems, die jeweils aus einem sichtbaren Bereich (Fenster), der benutzererzeugte Ereignisse empfängt und Daten darstellt, und aus einem nicht sichtbaren Objekt bestehen, das den Zustand der Komponente speichert und über bestimmte Operationen den sichtbaren Bereich verändern kann. Die Widgets W1-W5 sind ins Fenstersystem des Produktionsanlagesteuersystems respektive der Produktionsanlagesteuerapplikationen eingebunden und nutzen dieses zur Interaktion mit dem Benutzer oder anderen Widgets des Fenstersystems respektive des Produktionsanlagesteuersystems oder der Produktionsanlagesteuerapplikationen. Ein aktives Widget W1-W5 ist auf der Arbeitsfläche A angeordnet und wird im Produktionsanlagesteuersystem respektive in der Produktionsanlagesteuerapplikationen ausgeführt, das heisst es befindet sich in einem "laufenden" ("executing") Zustand und läuft auf einem oder mehreren Prozessoren.

Wie in der Figur 3 schematisch dargestellt ist, umfassen die Widgets W5 jeweils eines oder mehrere Inhaltsfenster F51, F52. Die Inhaltsfenster F51, F52 dienen zur Darstellung und/oder Manipulation von Daten und können zudem auch Eingabeelemente zur Eingabe von Datenwerten und/oder Instruktionen umfassen. Die in den Inhaltsfenstern F51, F52 dargestellten Daten umfassen Datenelemente D5, beispielsweise mit Datenwerten von Produktions- und Anlageparametern, produktions- und anlagespezifischen Statuswerten, und konkreten Produktdaten wie Produktbezeichnungen oder Produktgrösse, und/oder andere darstellbare Datenobjekte wie Grafiken oder Bilder B5, beispielsweise Produktbilder von Zeitungstitelblättern, Deckblättern oder Beilagen in der Druckproduktweiterverarbeitung. In einem konkreten Beispiel umfasst ein Inhaltsfenster F51 ein spezifisch ausgerichtetes Bild B5 vom Titelblatt einer konkreten, zu verarbeitenden Zeitung, sowie Datenelemente mit produktions- und anlagespezifischen Statuswerten hinsichtlich der Vollständigkeit der für die Produktion benötigen Datensätze, z.B. Datensätze des Verlegers der Zeitung, hinsichtlich der Belegung von Zuförderern mit den für die Produktion benötigten Vorprodukten (Hauptprodukte und Beilagen), und hinsichtlich der vorliegenden Definition eines für die Produktionsanlage 1 definierten und wählbaren Produktionsfalls, der die Konfiguration und Zusammenschaltung der Maschinen 10-15 und/oder Förderer 21-25 der Produktionsanlage 1 bestimmt. Ein weiteres Inhaltsfenster F52 umfasst beispielsweise mehrere Datenelemente D5 jeweils mit der Bezeichnung eines Vorprodukts, z.B. verschiedene Zeitungsteile und Werbebeilagen, und einer zugeordneten Auflagezahl.

Der Navigationsbereich 61 zeigt dem Benutzer eine miniaturisierte Darstellung der gesamten Arbeitsfläche A und der darauf angeordneten Widgets W1-W5. Der Navigationsbereich 61 mit der miniaturisiert dargestellten Arbeitsfläche A* und den miniaturisiert dargestellten Widgets W1*, W2*, W3*, W4*, W5* ist mit dem Informationsbereich 62 über einen Auswahlindikator L gekoppelt, welcher dem Benutzer im Navigationsbereich 61 den im Informationsbereich 62 dargestellten Ausschnitt A' der Arbeitsfläche A anzeigt. Der Auswahlindikator L dient dem Benutzer wie eine Lupe und ist im Navigationsbereich 61 in der miniaturisierten Arbeitsfläche A* bewegbar, so dass der Benutzer einen beliebigen Ausschnitt A' der Arbeitsfläche A zur voll aufgelösten Darstellung im Informationsbereich 62 auswählen kann. Wie mit dem Pfeilkreuz im Auswahlindikator angedeutet wird, ist der Auswahlindikator L sowohl in der horizontalen als auch in der vertikalen Richtung bewegbar und kann vom Benutzer zur Ausschnittsauswahl positioniert werden. Je nach Ausführungsvariante ist die Dimensionierung (Höhe, Breite) des Auswahlindikators L einstellbar respektive konfigurierbar (skalierbar), beispielsweise abhängig von den Abmessungen der betreffenden Anzeige 60. In einer vorteilhaften Variante respektive Konfiguration stimmt die Breite des Auswahlindikators L mit der Breite der miniaturisierten Arbeitsfläche A* überein, so dass der Benutzer allein durch vertikales Verschieben des Auswahlindikators L über die gesamte Arbeitsfläche A navigieren kann. Wie mit dem Pfeilkreuz P3 angedeutet wird, kann der Benutzer den angezeigten Ausschnitt A' der Arbeitsfläche zudem auch durch direktes Verschieben der Arbeitsfläche A im Navigationsbereich 62 wählen, beispielsweise durch eine mit einem oder mehreren Fingern auf der berührungsempfindlichen Anzeige 60 ausgeführten Wischbewegung in die gewünschte Richtung.

Wie in Figur 3 ersichtlich ist, ist der Navigationsbereich 61 in mehrere Navigationsteilbereiche N1, N2, N3 aufgeteilt. Die Navigationsteilbereiche N1, N2, N3 entsprechen beispielsweise verschiedenen Applikationen, Produktionsphasen und/oder Datengruppen. Zum Beispiel ist der Navigationsteilbereich N1 als Vorbereitungsbereich mit Widgets und Inhaltsfenstern zum Definieren einer Produktionskonfiguration eines Druckproduktionssystems oder Druckproduktweiterverarbeitungssystems vorgesehen, der Navigationsteilbereich N2 ist als Produktionsbereich mit Widgets und Inhaltsfenstern zur Überwachung und Steuerung einer Herstellung oder Weiterverarbeitung von Druckprodukten im Druckproduktionssystem respektive Druckproduktweiterverarbeitungssystem vorgesehen, und der Navigationsteilbereich N3 ist als Verteilungsbereich mit Widgets und Inhaltsfenstern zum Definieren und Überwachen der Auslieferung der Druckprodukte des Druckproduktionssystems respektive Druckproduktweiterverarbeitungssystems vorgesehen. In einer Variante ist ein weiterer Navigationsteilbereich als Auswertungsbereich für statistische Funktionen, Reportingfunktionen und Analysefunktionen betreffend der Herstellung, Weiterverarbeitung und/oder Auslieferung von Druckprodukten im Druckproduktionssystem respektive Druckproduktweiterverarbeitungssystem vorgesehen.

Die Benutzerschnittstelle 6 umfasst zudem einen Katalogbereich K1 mit einem Widget-Inventar 610 mit sämtlichen verfügbaren aber zur Zeit inaktiven Widgets. Das Widget-Inventar 610 umfasst ausschliesslich inaktive Widgets, sobald ein Widget auf der Arbeitsfläche A positioniert ist, wird es aktiv, d.h. ausgeführt, und erscheint nicht im Widget-Inventar 610. Das Schnittstellenmodul 9 ist eingerichtet, bei einer Verschiebung eines Widgets aus dem Informationsbereich 62 oder den Navigationsteilbereichen N1, N2, N3 des Navigationsbereichs 61 ins Widget-Inventar 610, das betreffende Widget von der Arbeitsfläche A zu entfernen, zu inaktivieren und im Widget-Inventar 610 als verfügbares, inaktives Widget aufzulisten und/oder als Icon grafisch darzustellen. Je nach Ausführungsvariante und/oder Anzahl inaktiver Widgets ist das Widget-Inventar 610 für den Benutzer ganz und dauernd sichtbar oder wird auf Eingabe eines einfachen Benutzerbefehls, beispielsweise Anklicken eines grafischen Symbols, dem Benutzer angezeigt.

Die Benutzerschnittstelle 6 umfasst zudem einen Login-Bereich 612, welcher eingerichtet ist Benutzidentifizierung und Zugriffsberechtigungsdaten entgegenzunehmen und/oder den eingeloggten Benutzer anzuzeigen, beispielsweise als Benutzername, Benutzeridentifizierung und/oder Bild des Benutzers. Das Einloggen kann beispielsweise auch über eine kontaktlose oder kontaktbehaftete Schnittstelle erfolgen, welche die Benutzeridentifizierung und in einer Variante auch die Zugriffsberechtigungsdaten von einem Datenträger, beispielsweise von einer Chipkarte liest. Die eingegebenen und/oder eingelesenen Benutzeridentifizierungs- und Berechtigungsdaten werden beispielsweise im Linienmaster 8 geprüft und der Benutzer wird bei vorliegender Berechtigung als aktiver Benutzer mit seinen zugeordneten Berechtigungen eingeloggt, beispielsweise zugeordnet zum betreffenden Endgerät 31-34, wo das Login stattfindet. In einer Variante ist jeder Benutzer auch einer definierten Benutzergruppe zugeordnet.

Beim Einloggen eines Benutzers stellt das Schnittstellenmodul 9 die Benutzerschnittstelle 6 auf der betreffenden Anzeige 60 gemäss den gespeicherten Konfigurationsdaten dar, die dem betreffenden Benutzer, der betreffenden Benutzergruppe und der betreffenden Anzeige 60 respektive dem betreffenden damit verbundenen Endgerät 31-38 zugeordnet sind. Abhängig von den Konfigurationsdaten, die für einen Benutzer in einem Benutzerprofil angelegt und gespeichert sind, kann der Benutzer beim Einloggen (oder später auch über eine wählbare Rücksetzfunktion) wählen, ob die Benutzerschnittstelle 6 am betreffenden Endgerät 31-38 eine in einem zugeordneten Benutzerprofil gespeicherte benutzerspezifische Benutzer- respektive Arbeitseinstellung, eine gespeicherte benutzerspezifische Grundeinstellung, eine gespeicherte gruppenspezifische Grundeinstellung oder eine generische Grundeinstellung für die aktuelle Konfiguration und Darstellung der Benutzerschnittstelle 6 und der darin angeordneten, positionierten und dimensionierten Komponenten und Bereiche wie Navigationsbereich 61, Informationsbereich 62, Steuerleiste 63, Widgets W1-W5, Navigationsteilbereiche N1, N2, N3, Inhaltsfenster F52, Auswahlindikator L, Zeitleiste 631, Schnellzugriffselemente 632, etc. verwendet werden soll.

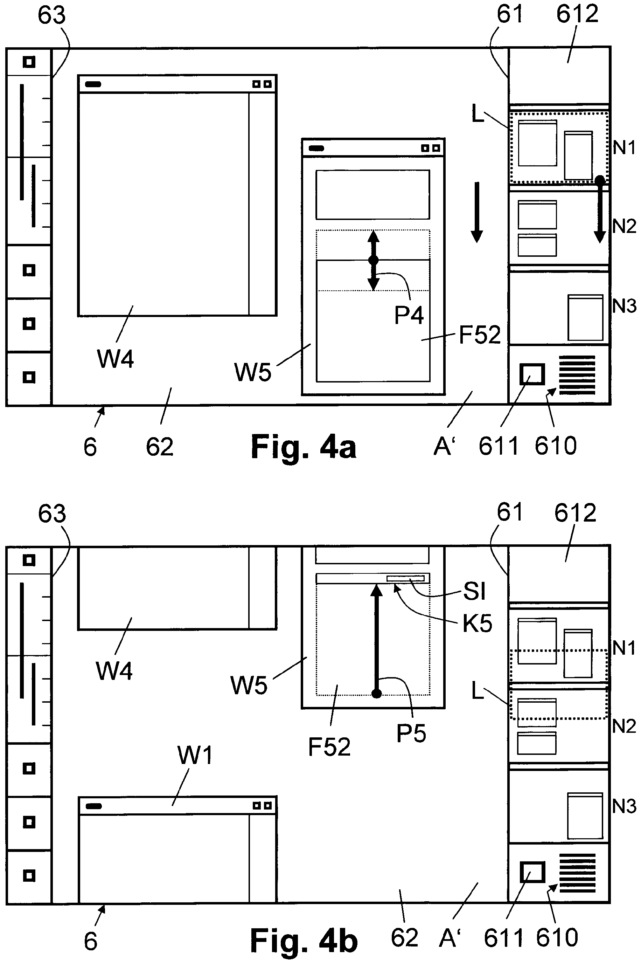

Die Figuren 4a und 4b illustrieren die Verschiebung des im Informationsbereich 62 dargestellten Ausschnitts A' der Arbeitsfläche A bei einer Bewegung des Auswahlindikators L über zwei aneinandergrenzende, benachbarte Navigationsteilbereiche N1, N2. Diese Verschiebung kann durch den Benutzer, wie oben beschrieben, durch Bewegen der Arbeitsfläche A im Informationsbereich 62 oder durch Verschieben des Auswahlindikators L im Navigationsbereich 61 vorgenommen werden. Wie durch Pfeil P4 angedeutet ist können Inhaltsfenster F52 eines Widgets W5 durch den Benutzer in ihrer Grösse verändert werden, wobei sich die Grösse des umgebenden Widgets W5 entsprechend anpasst. Wie mit dem Pfeil P5 angedeutet wird, können Inhaltsfenster F52 eines Widgets W5 durch den Benutzer bis auf ihre Kopfleiste K5 reduziert werden. In einer Variante können auch Widgets vom Benutzer auf ihre Kopfleiste reduziert werden. Beim Reduzieren von Widgets und/oder Inhaltsfenstern F52 werden in der Kopfleiste K5 jeweils konfigurierbar einer oder mehrere Statusindikatoren S1 angezeigt, welche dem Benutzer jeweils den aktuellen Wert von Statuswerten angeben, die im betreffenden Widget respektive Inhaltsfenster F52 enthalten sind, beispielsweise als Symbole oder Werte. Je nach Ausführung, Anwendung und Konfiguration können auch mehrere Statuswerte in einer Kopfleiste K5 gemäss vordefinierten oder benutzerdefinierten Regeln zu einem Sammelstatus kombiniert werden.

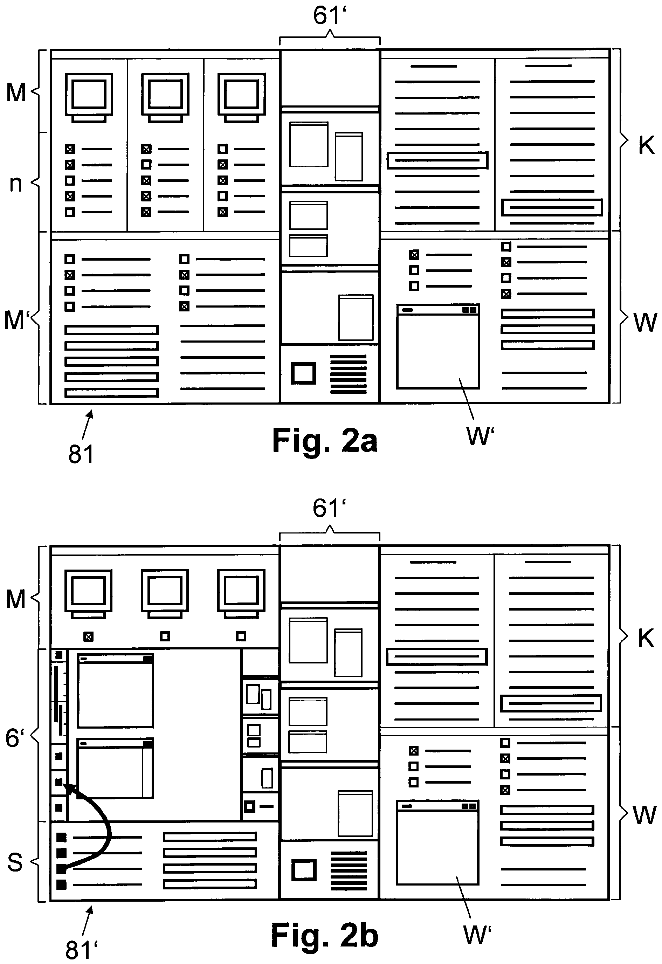

Die Figuren 2a und 2b zeigen Beispiele einer durch das Konfigurationsmodul 80 erzeugten grafischen Konfigurationsschnittstelle 81, 81' zum Konfigurieren der Benutzerschnittstellen 6 für die Endgeräte 31-38 der Produktionsanlage 1. Die Konfigurationsschnittstelle 81, 81' wird beispielsweise auf der Anzeige 60 dargestellt, wenn ein berechtigter Benutzer einen Konfigurationsmodus setzt, beispielsweise durch Betätigen eines Konfigurationsknopfs 611 in der Benutzerschnittstelle 6.

Die vom Konfigurationsmodul 80 über die Konfigurationsschnittstelle 81, 81' zur Konfiguration der Benutzerschnittstelle 6 erfassten Konfigurationsdaten werden vorzugsweise als definierte Grundeinstellungen für die verschiedenen Anzeigen 60 respektive Endgeräte 31-38 der Produktionsanlage 1 gespeichert, beispielsweise im Linienmaster 8. Zudem ermöglicht das Konfigurationsmodul 80 respektive die Konfigurationsschnittstelle 81, 81' auch die Definition von gruppen- und/oder benutzerspezifischen Einstellungen der Benutzerschnittstellen 6. In der Regel werden benutzerspezifische Konfigurationsdaten jedoch direkt durch Manipulationen des Benutzers in der Benutzerschnittstelle 6 bestimmt und von einem Profilmodul des Schnittstellenmoduls 9 dem Benutzer zugeordnet in einem Benutzerprofil gespeichert, beispielsweise zentralisiert im Linienmaster 8.

Wie in den Figuren 2a und 2b schematisch dargestellt ist, umfasst die Konfigurationsschnittstelle 81, 81' einen Widget-Katalog K mit Widgets, die im Produktionsanlagesteuersystem respektive in den Produktionsanlagesteuerapplikationen verfügbar sind. Die Widgets sind beispielsweise als grafische Symbole oder Listen mit Bezeichnungen dargestellt, zum Beispiel hierarchisch strukturiert mit Widget-Typen oder - Klassen und darin enthaltenen verfügbaren Widgets. Ein im Widget-Katalog K selektiertes Widget W' kann vom Benutzer im Widget-Konfigurationsbereich W detailliert spezifiziert und konfiguriert werden, beispielsweise hinsichtlich seiner Grösse, enthaltenen Inhaltsfenster und/oder Verknüpfungen zu anderen Widgets.

Wie in den Figuren 2a und 2b ersichtlich ist, umfasst die Konfigurationsschnittstelle 81, 81' eine Darstellung des Navigationsbereichs 61' der Benutzerschnittstellen 6, wie oben beschrieben mit mehreren Navigationsteilbereichen, die jeweils einen zugeordneten Teil der Arbeitsfläche 6 und die darauf angeordneten Widgets miniaturisiert darstellen. Die Grössen der Navigationsteilbereiche kann in der Konfigurationsschnittstelle 81, 81' vorzugsweise direkt in der Darstellung des Navigationsbereichs 61' vorgenommen werden, beispielsweise durch entsprechendes Verschieben und Einstellen der Bereichsgrenzen. Zudem kann ein Navigationsteilbereich als gekoppelt oder entkoppelt definiert werden. Ein gekoppelt definierter Navigationsteilbereich wird später so generiert, dass er Änderungen im betreffenden Teil in den anderen Endgeräten 31-38 repliziert, denen der betreffende Teil zugeordnet ist. Ein entkoppelt definierter Navigationsteilbereich hingegen, wird so generiert wird, dass er Änderungen im betreffenden Teil nicht in den anderen Endgeräten 31-38 repliziert.

Durch Bewegen eines Widgets W' vom Widget-Katalog K oder vom Widget-Konfigurationsbereich W an eine gewünschte Stelle in einem Navigationsteilbereich des dargestellten Navigationsbereichs 61', können die Widgets W' vom Benutzer über die Konfigurationsschnittstelle 81, 81' auf der Arbeitsfläche A positioniert werden.

Je nach Ausführung können die Widgets W' vom Benutzer einem oder mehreren Navigationsteilbereichen exklusiv zugeordnet, respektive für einen oder mehrere Navigationsteilbereiche explizit gesperrt werden, so dass ein derart konfiguriertes Widget W' in der Benutzerschnittstelle 6 vom Benutzer nicht in einen unzulässigen Navigationsteilbereich N1, N2, N3 verschoben werden kann. Beim Versuch ein Widget W' in einen unzulässigen Navigationsteilbereich zu verschieben, bewirkt das Schnittstellenmodul 9 gemäss entsprechenden Regeln ein Zurückspringen des Widget W' an seinen Ursprungsort. In einer Ausführungsvariante sind gewisse Widgets W' oder Klassen von Widgets' im Widget-Katalog K so definiert, dass sie generell nur in gewissen Navigationsteilbereichen angeordnet werden können respektive für gewisse Navigationsteilbereiche gesperrt sind.

Die Konfigurationsschnittstelle 81, 81' umfasst zudem einen Monitorbereich M, in welchem die Endgeräte 31-38 respektive deren Anzeigen 60 beispielsweise grafisch angezeigt und vom Benutzer über die Konfigurationsschnittstelle 81, 81' aktiviert und mit einer zugeordneten Benutzerschnittstelle 6 konfiguriert werden können.

Im Beispiel gemäss der Figur 2a umfasst die Konfigurationsschnittstelle 81 einen Monitor-Konfigurationsbereich n, in welchem die definierten Navigationsteilbereiche, beispielsweise durch Anklicken eines Kästchens, für ein bestimmtes Endgerät 31-38 respektive dessen Anzeige 60 durch den Benutzer gezielt und selektiv aktiviert und zugeordnet werden können. Im detaillierten Monitorbereich M' kann der Benutzer weitere Aspekte der Benutzerschnittstellen für die verschiedenen Endgeräte 31-38 respektive deren Anzeigen 60 einstellen, beispielsweise die Steuerleiste 63 durch Ein-/Ausschalten und Konfigurieren der Zeitleiste 631, und durch Hinzufügen/Entfernen und Konfigurieren von Schnellzugriffselementen 632. Die Schnellzugriffselemente 632 können einem Widget, einer bestimmten Position auf der Arbeitsfläche A oder einem definierten Ausschnitt A' der Arbeitsfläche A zugeordnet werden, so dass bei einer Betätigung des betreffenden Schnellzugriffselements 632, im Informationsbereich 62 der entsprechende Ausschnitt A' der Arbeitsfläche A mit dem gegebenenfalls zugeordneten Widget dargestellt wird, und der Auswahlindikator L im Navigationsbereich 61 den entsprechenden Teilbereich der miniaturisiert dargestellten Arbeitsfläche A* mit dem darauf angeordneten betreffenden miniaturisierten Widget anzeigt. Vorzugsweise sind die Schnellzugriffselemente 632 jedoch so eingerichtet, dass ihnen nicht bloss über die Konfigurationsschnittstelle 81 sondern vom Benutzer im laufenden Betrieb auch in der Benutzerschnittstelle 6 ein Widget zugeordnet werden kann. Die Schnellzugriffselements 632 und die Widgets sind beispielsweise so gekoppelt, dass der Benutzer die dynamische Zuordnung in der Benutzerschnittstelle 6 dadurch vornehmen kann, dass er das betreffende Widget von der Arbeitsfläche A oder von der miniaturisiert dargestellten Arbeitsfläche A* auf das gewünschte, zuzuordnende Schnellzugriffselement 632 bewegt ("drag") und dort positioniert respektive fallen lässt ("drop"). Bei dieser dynamischen Zuordnung eines Widgets zu einem Schnellzugriffselement 632 erfolgt jedoch keine Neupositionierung des Widgets auf der Arbeitsfläche A respektive der miniaturisiert dargestellten Arbeitsfläche A*.

Im Beispiel gemäss der Figur 2b umfasst die Konfigurationsschnittstelle 81' für ein im Monitorbereich M selektiertes Endgerät 31-38 respektive dessen Anzeige 60 eine miniaturisierte Darstellung 6' seiner zugeordneten Benutzerschnittstelle 6', gemäss der aktuellen Konfiguration, wie oben beschrieben mit einer Steuerleiste, einem Informationsbereich und einem Navigationsbereich mit mehreren Navigationsteilbereichen.

Die Konfiguration einer Benutzerschnittstelle kann vom Benutzer direkt in der miniaturisierten Darstellung 6' vorgenommen werden, insbesondere können die definierten Navigationsteilbereiche, für die Benutzerschnittstelle eines bestimmten Endgeräts 31-38 respektive dessen Anzeige 60 durch den Benutzer gezielt und selektiv aktiviert und zugeordnet werden. Die Steuerleiste kann zudem für ein bestimmtes Endgerät 31-38 respektive dessen Anzeige 60 in einem entsprechenden Steuerleisten-Konfigurationsbereich S definiert werden, und beispielsweise durch Selektieren und Bewegen von Komponenten der Zeitleiste 631 oder von Schnellzugriffselementen 632 aus dem Konfigurationsbereich S in die miniaturisierte Darstellung der Steuerleiste der betreffenden Benutzerschnittstelle 6' konfiguriert werden, wie in der Figur 2b mit dem Pfeil angedeutet ist.

Die Konfiguration der Benutzerschnittstellen 6 für die verschiedenen Endgeräte 31-38 respektive deren Anzeigen 60 und die damit verbundene Konfiguration der Arbeitsfläche A und zugeordneten Navigationsteilbereiche N1, N2, N3 wird durch das Konfigurationsmodul 80 gespeichert, beispielsweise im Linienmaster 8 und/oder in den Endgeräten 31-38.

Wie oben mit Bezug zu den Figuren 3, 4a und 4b erläutert wurde, kann der im Informationsbereich 62 dargestellte Ausschnitt A' der Arbeitsfläche A durch Bewegen des Auswahlindikators L im Navigationsbereich 61 oder durch Bewegen der Arbeitsfläche 6 im Informationsbereich 62 verschoben und verändert werden. Die vom Konfigurationsmodul 80 definierte und vom Schnittstellenmodul 9 generierte Benutzerschnittstelle 6 ist zudem so eingerichtet, dass Widgets vom Benutzer während des Produktionsbetriebs auf der Arbeitsfläche A verschiebbar und neu positionierbar sind.

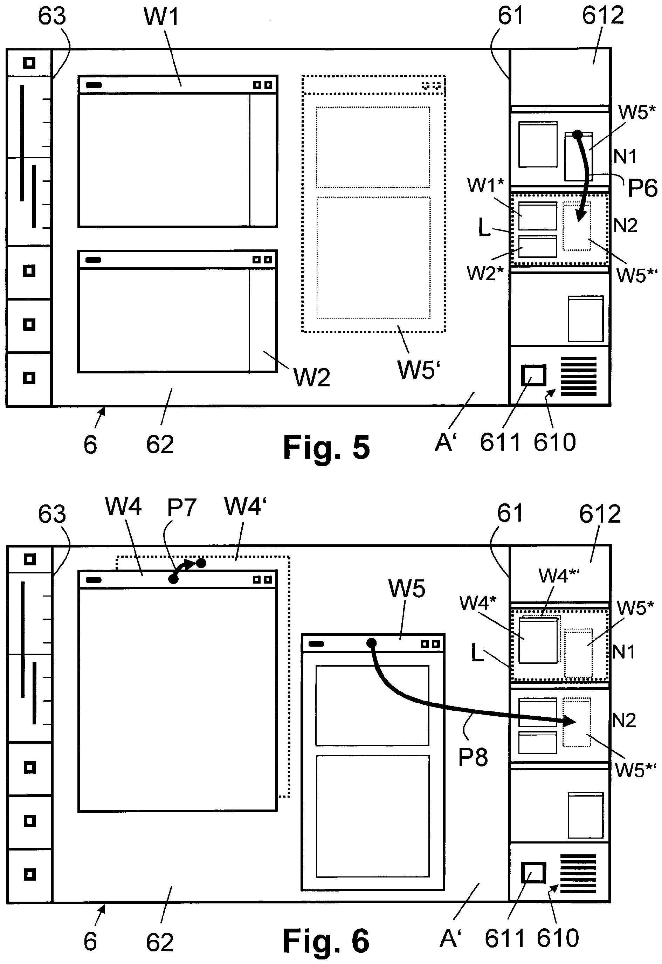

Figur 5 illustriert schematisch, dass Widgets vom Benutzer neu positioniert werden können, indem im Navigationsbereich 61 die miniaturisierte Darstellung des betreffenden Widgets W5* entsprechend bewegt wird. Wie im Beispiel der Figur 5 durch den Pfeil P6 angedeutet wird, erfolgt die Verschiebung zum Beispiel dadurch, dass die Kopfleiste eines (miniaturisierten) Widgets erfasst wird, beispielsweise durch Positionieren eines Zeigers mittels einer Computermaus, eines Trackballs oder eines Touchpads, oder vorzugsweise auf der berührungsempfindlichen Anzeige 60 durch geeignetes Positionieren von einem oder mehreren Fingerspitzen, und dann an die gewünschte Position verschoben wird, beispielsweise durch entsprechendes Ziehen ("drag") des Zeigers respektive der Fingerspritzen auf dem Bildschirm der Anzeige 60 und Loslassen ("drop") an der gewünschten Stelle. Im Beispiel der Figur 5 bewirkt die grenzübergreifende Verschiebung des miniaturisierten Widgets W5* vom Navigationsteilbereich N1 an die neue, mit dem Bezugszeichen W5*' bezeichnete Stelle im Navigationsteilbereich N2 eine entsprechende, durch das Bezugszeichen W5' angedeutete, Verschiebung und Neupositionierung des betreffenden Widgets W5 von einem im Informationsbereich 62 nicht sichtbaren Bereich der Arbeitsfläche A in den im Informationsbereich 62 dargestellten Ausschnitt A' der Arbeitsfläche.

An dieser Stelle soll festgehalten werden, dass in den Figuren miniaturisiert dargestellte Widgets mit einem Stern "*" markiert werden, dass Neupositionierungen und Veränderungen mit einem Strich ""' markiert werden, und dass die Neupositionierung eines miniaturisiert dargestellten Objekts mit der Kombination "*"', respektive eine miniaturisierte Darstellung eines neu positionierten miniaturisierten Objekts mit der Kombination "'*" markiert wird.

Figur 6 illustriert eine weitere Möglichkeit für den Benutzer in der Benutzerschnittstelle 6 ein Widget auf der Arbeitsfläche A zu verschieben, indem das betreffende Widget W4, W5 im Informationsbereich 62 direkt im dargestellten Ausschnitt A' erfasst und in den Navigationsbereich 61 oder im Informationsbereich 62 an eine andere Stelle im Ausschnitt A' verschoben wird. Wie im Beispiel der Figur 6 mit dem Pfeil P7 angedeutet wird, wird das Widget W4 auf der Arbeitsfläche A direkt im dargestellten Ausschnitt A' an eine mit dem Bezugszeichen W4' bezeichnete neue Position verschoben, was im Navigationsbereich 61 eine Verschiebung des miniaturisierten Widgets W4* zum miniaturisierten Widget W4*' bewirkt. Andererseits wird das Widget W5 vom dargestellten Ausschnitt A' im Informationsbereich 62 in den Navigationsteilbereich N2 des Navigationsbereichs 61 verschoben, was eine Verschiebung aus dem im Informationsbereich 62 dargestellten Ausschnitt A' an einen im Informationsbereich 62 nicht sichtbaren Bereich der Arbeitsfläche A, und im Navigationsbereich 61 eine Verschiebung des miniaturisierten Widgets W5* zum miniaturisierten Widget W5*' bewirkt.

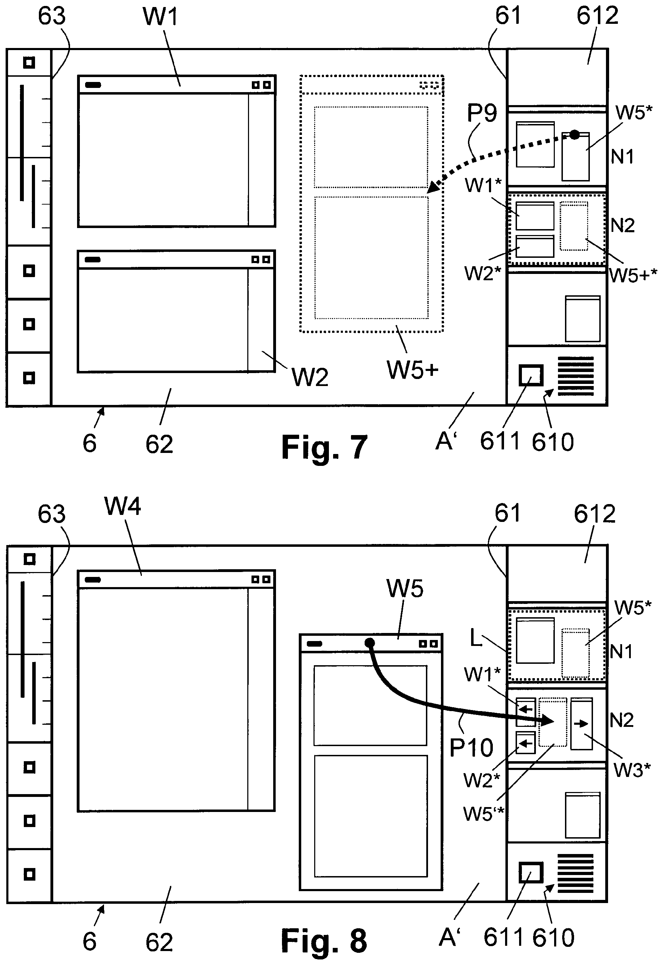

Figur 7 illustriert an einem Beispiel, wie in der Benutzerschnittstelle 6 durch Benutzer von einem Widget W5 auf der Arbeitsfläche A an einer anderen Stelle der Arbeitsfläche A eine Kopie erzeugt werden kann. Wie im Beispiel der Figur 7 durch den gestrichelten Pfeil P9 angedeutet wird, wird in einem vom Benutzer gesetzten Kopiermodus, durch den Benutzer eine miniaturisierte Darstellung eines Widgets W5* aus dem Navigationsbereich 61 in den im Informationsbereich 61 sichtbaren Ausschnitt A' der Arbeitsfläche A bewegt, was die Erzeugung einer durch das Bezugszeichen W5+ bezeichneten Kopie des entsprechenden Widgets W5 bewirkt, wobei die Kopie im Navigationsteilbereich N2 durch das miniaturisiert dargestellte Widget W5+* repräsentiert wird. Wenn kein Kopiermodus gesetzt ist, bewirkt eine Verschiebung des miniaturisierten Widgets W5* vom Navigationsteilbereich N1 in den aktiven Ausschnitt A* im Informationsbereich 62 eine entsprechende Verschiebung des bereffenden Widgets W5 auf der Arbeitsfläche A, und entsprechend eine Verschiebung des miniaturisierten Widgets W5* vom Navigationsteilbereich N1 in den Navigationsteilbereich N2.

Figur 8 illustriert an einem Beispiel die durch das Schnittstellenmodul 9 in der Benutzerschnittstelle 6 bewirkte Neuanordnung von Widgets, wenn ein Widget W5 an eine Stelle der Arbeitsfläche A bewegt wird, welche nicht genügend Platz für eine nichtüberlappende Positionierung des Widgets aufweist, und ohne Neuanordnung der Widgets zur Überlappung des bewegten Widgets mit anderen Widgets führen würde. Wie im Beispiel der Figur 8 schematisch dargestellt wird, werden bei der durch den Pfeil P10 angedeuteten Bewegung des Widgets W5 vom dargestellten Ausschnitt A' in den im Informationsbereich 62 nicht sichtbaren Navigationsteilbereich N2 die miniaturisiert dargestellten Widgets W1*, W2*, W3* jeweils horizontal so verschoben, dass genügend Platz für eine überlappungsfreie Positionierung des mit dem Bezugszeichen W5'* bezeichneten, miniaturisiert dargestellten Widgets geschaffen wird. Aufgrund der proportionalen Darstellung der Arbeitsfläche A und der darauf angeordneten Widgets im Navigationsbereich 61 geht mit der Neuanordnung der miniaturisierten Widgets W1*, W2*, W3* im Navigationsbereich 61 in der Benutzerschnittstelle 6 eine entsprechende Neuanordnung der entsprechenden Widgets W1, W2 und W3 auf dem betreffenden im Informationsbereich 62 nicht sichtbaren Teil der Arbeitsfläche A einher.

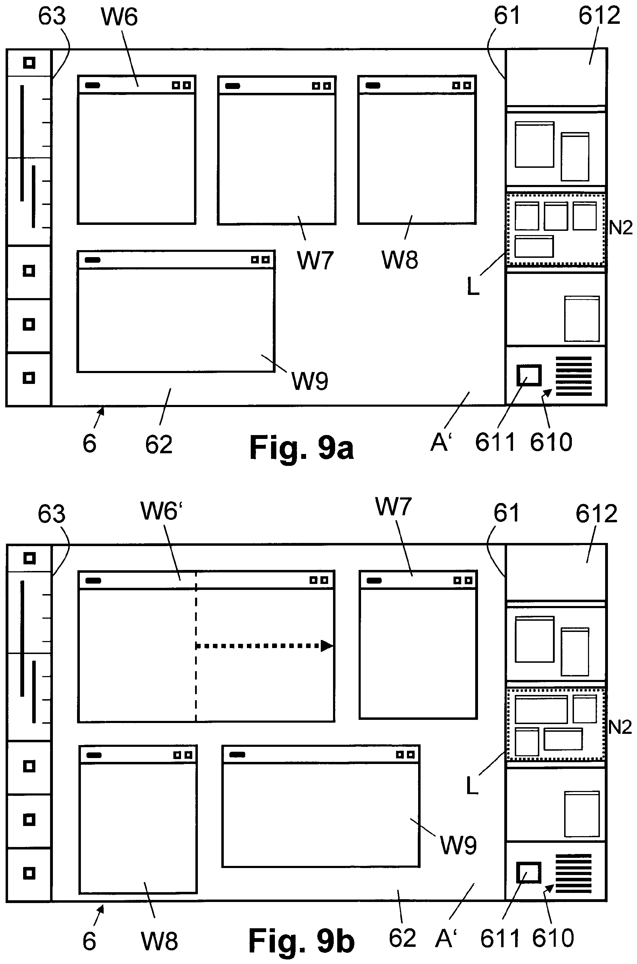

Figuren 9a und 9b illustrieren an einem Beispiel die durch das Schnittstellenmodul 9 in der Benutzerschnittstelle 6 bewirkte Neuanordnung von Widgets, wenn ein Widget W6 vom Benutzer in seiner Dimensionierung so vergrössert wird, dass ohne Neuanordnung der Widgets eine Überlappung des vergrösserten Widgets mit anderen (benachbarten) Widgets verursacht würde. Figur 9a illustriert die Ausgangslage mit den überlappungsfrei angeordneten Widgets W6, W7, W8 und W9 des im Informationsbereich 62 dargestellten Ausschnitts A' und den entsprechenden miniaturisiert dargestellten Widgets W6*, W7*, W8* und W9* im entsprechenden Navigationsteilbereich N2 im Navigationsbereich 61.

Die Figur 9b illustriert schematisch die durch das Schnittstellenmodul 9 in der Benutzerschnittstelle 6 automatisch erzeugte Neuanordnung der Widgets W7, W8, W9 respektive der entsprechenden miniaturisiert dargestellten Widgets W7*, W8* und W9* bei einer mit dem Bezugszeichen W6' bezeichneten Vergrösserung des Widgets W6. Zusätzlich zur horizontalen Verschiebung (Verdrängung) von Widgets im Beispiel der Figur 8 bewirkt das Schnittstellenmodul 9 im Beispiel der Figuren 9a und 9b in der Benutzerschnittstelle 6 zudem auch einen Zeilenumbruch, da die horizontale Verschiebung des Widgets 8 ohne Zeilenumbruch zu einer Positionierung ausserhalb der definierten Arbeitsfläche A führen würde. Eine derartige Neuanordnung von Widgets mit einem Zeilenumbruch wird auch bei Positionierungen von Widgets im Navigationsbereich 61 gemäss dem Beispiel von Figur 8 ausgeführt, wenn Widgets durch die Neuanordnung über den Seitenrand (Breite) der Arbeitsfläche A hinausgedrängt werden.

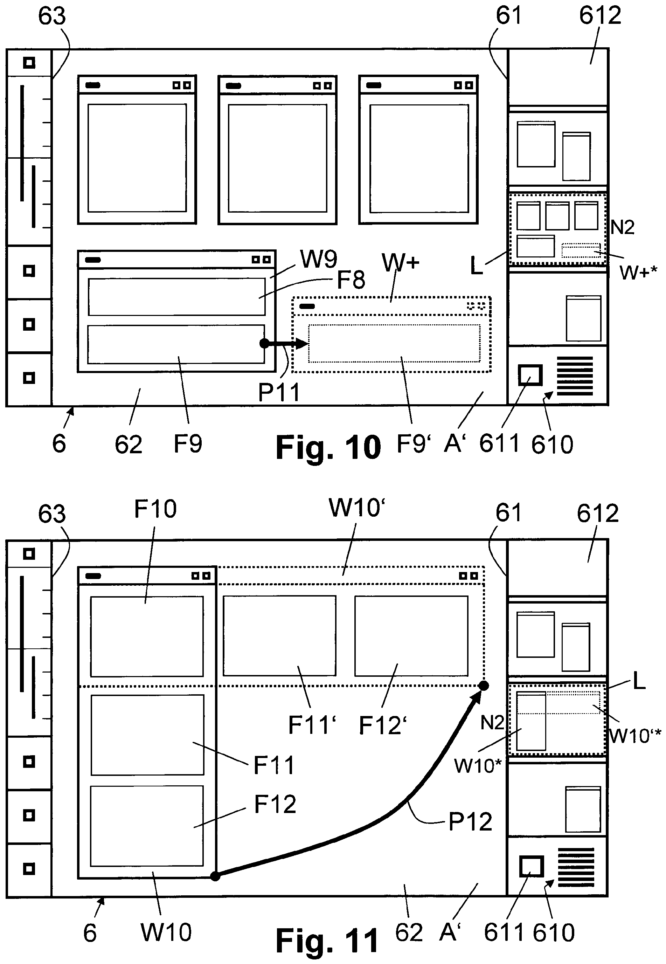

Figur 10 illustriert schematisch eine weitere Benutzeroperation, die durch die Benutzerschnittstelle 6 respektive das Schnittstellenmodul 9 unterstützt und ausgeführt wird. Wie mit dem Pfeil P11 angedeutet wird, sind durch den Benutzer Inhaltsfenster F9 aus ihren Widgets W9, in die sie eingebettet sind, herauslösbar und in einem neu generierten, separaten Widget W+ auf der Arbeitsfläche A positionierbar. Im Beispiel der Figur 10 wird wie mit dem Pfeil 11 angedeutet das Inhaltsfenster F9 vom Benutzer erfasst und vollständig aus dem Ausgangs-Widget W9 hinausbewegt und ausserhalb des Ausgangs-Widget W9 auf der Arbeitsfläche 9 positioniert und losgelassen ("drag and drop"). Dabei erzeugt das Schnittstellenmodul 9 ein neues Widget W+, in das das herausgezogene Inhaltsfenster F9 vom Schnittstellenmodul 9 eingebettet wird. Wie in der Figur 10 ersichtlich ist, wird das neue Widget W+ im Navigationsbereich 61, wie mit dem Bezugszeichen W+* bezeichnet, im betreffenden Navigationsteilbereich N2 miniaturisiert dargestellt.

Figur 11 illustriert schematisch eine weitere durch die Benutzerschnittstelle 6 respektive das Schnittstellenmodul 9 unterstützte Benutzeroperation. Wie mit dem Pfeil P12 angedeutet wird, wird ein Widget W10 vom Benutzer so neu dimensioniert, dass das Verhältnis von seiner Breite zu seiner Höhe im Wesentlichen im neu dimensionierten Widget W10' umgekehrt wird. Wie in der Figur 11 ersichtlich ist, führt das Schnittstellenmodul 9 dabei in der Benutzerschnittstelle 6 eine Neuordnung der Inhaltsfenster F11, F12 des Ausgangs-Widgets W10 durch, so dass die mit den Bezugszeichen F11', F12' bezeichneten Inhaltsfenster im neu dimensionierten Widget W10' überlappungsfrei nebeneinander angeordnet sind. Nötigenfalls, nimmt das Schnittstellenmodul dabei auch eine Grössenanpassung des neu dimensionierten Widget W10' vor, um eine vollständige Darstellung der neu angeordneten Inhaltsfenster F10, F11', F12' ohne notwendiges Verschieben ("scrolling") zu ermöglichen. Wie in Figur 11 dargestellt ist, wird im betreffenden Navigationsteilbereich N2 die miniaturisierte Darstellung des Widgets W10* entsprechend angepasst, wie mit dem Bezugszeichen W10'* angezeigt wird.

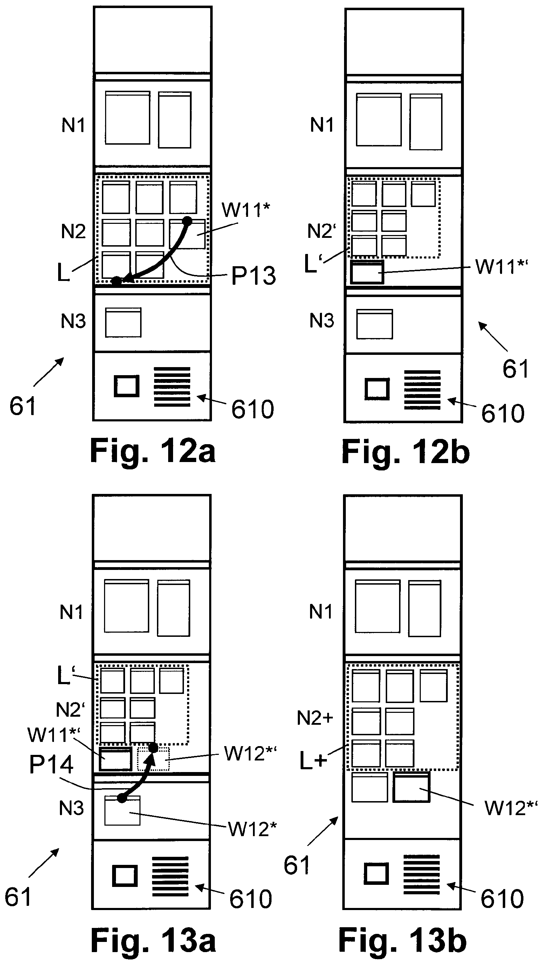

Die Figuren 12a und 12b illustrieren das durch das Schnittstellenmodul 9 gesteuerte Verhalten des Navigationsbereichs 61 bei der Positionierung eines Widgets an einer Stelle im Navigationsteilbereich N2 mit ungenügend Platz zur überlappungsfreien Darstellung der miniaturisierten Widgets. Dabei kann das neu zu positionierende Widget vom Informationsbereich 62 in den Navigationsbereich 61 verschoben oder innerhalb des Navigationsbereichs 61 verschoben werden. Wie im Beispiel der Figuren 12a und 12b mit dem Pfeil P13 angedeutet wird, wird das miniaturisierte Widget W11* innerhalb des Navigationsteilbereichs N2 an eine Stelle im unteren Rand verschoben, wo für eine überlappungsfreie Positionierung des Widgets zu wenig Platz vorhanden ist. Wie in der Figur 12b ersichtlich ist, erzeugt das Schnittstellenmodul 9 eine skalierte Darstellung des Navigationsteilbereichs N2', wobei sowohl der mit dem Bezugszeichen L' bezeichnete Auswahlindikator als auch die miniaturisierten Widgets verkleinert werden, so dass das verschobene, mit dem Bezugszeichen W11*' bezeichnete miniaturisierte Widget im Navigationsteilbereich N2' überlappungsfrei positionierbar ist, wobei es ebenfalls entsprechend skaliert dargestellt wird. In einer Ausführung wird der dem Navigationsteilbereich N2' zugeordnete Teil der Arbeitsfläche A und somit die gesamte Arbeitsfläche A entsprechend vergrössert. In einer anderen Variante bleibt die Gesamtfläche der Arbeitsfläche A gleich und der Teil der Arbeitsfläche A, der dem Navigationsteilbereich N2' zugeordnet ist, wird auf einen anderen Teil der Arbeitsfläche A ausgedehnt, der sich entsprechend verkleinert.

Figuren 13a und 13b illustrieren das durch das Schnittstellenmodul 9 gesteuerte Verhalten des Navigationsbereichs 61 bei der Entleerung eines Navigationsteilbereichs N3 durch Verschiebung des einzig darin verbliebenen miniaturisierten Widgets W12*. Wie mit dem Pfeil P14 angedeutet ist, wird das einzige miniaturisierte Widget W12* im Navigationsteilbereich N3, von diesem in einen anderen Navigationsteilbereich N2' verschoben, so dass nach der Verschiebung kein Widget im Navigationsteilbereich N3 verbleibt. Wie in der Figur 13a ersichtlich ist, wird das neu positionierte Widget W12*' im skalierten Navigationsteilbereich N2' ebenfalls entsprechend skaliert dargestellt. Wie in der Figur 13b schematisch dargestellt ist, wird der entleerte Navigationsteilbereich N3 vom Navigationsbereich 61 entfernt, beispielsweise nach dem zuvor vom Benutzer eine Bestätigung angefordert wird, dass der durch die Verschiebung des miniaturisierten Widgets W12* leer gewordene Navigationsteilbereich N3 tatsächlich vom Navigationsbereich 61 der Benutzerschnittstelle 6 gelöscht werden soll. Ein gelöschter Navigationsteilbereich N3 kann jederzeit über die oben mit Bezug zu den Figuren 2a und 2b beschriebene Konfigurationsschnittstelle 81, 81' wieder im Navigationsbereich 61 aktiviert werden. Wie in Figur 13b ersichtlich ist, werden der mit dem Bezugszeichen N2+ bezeichnete Navigationsteilbereich und die darin angeordneten miniaturisierten Widgets und der Auswahlindikator L+ wieder unskaliert, in der ursprünglichen Grösse dargestellt, nachdem der leere Navigationsteilbereich N3 entfernt wurde und dadurch wieder genügend Platz für eine unskalierte Darstellung geschaffen wurde.

In einer weiteren Benutzeroperation können zwei oder mehr Widgets auf der Arbeitsfläche A aneinandergereiht werden, beispielsweise durch Zusammenschieben von jeweils zwei benachbarten Seiten, und dann auf der Arbeitsfläche A als Einheit bewegt werden, bis sie durch eine definierte Operation wieder voneinander getrennt werden, beispielsweise durch eine "Schüttelbewegung" des kombinierten Einheitsobjekts auf der Arbeitsfläche A mittels einer entsprechenden Finger- oder Mausmanipulation.

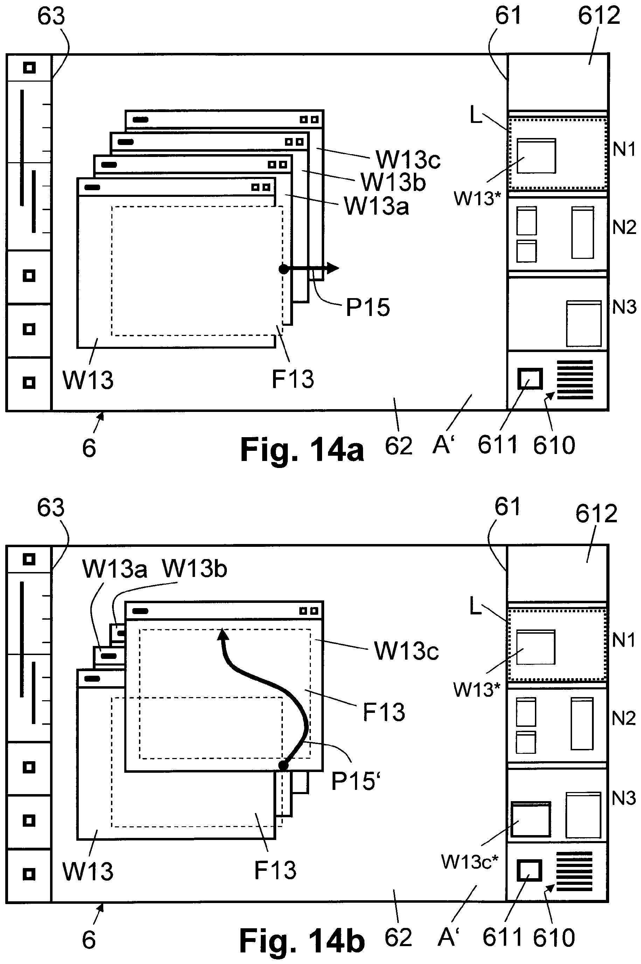

In den nachfolgenden Abschnitten werden mit Bezug zu den Figuren 14a, 14b, 15a-15c und 16a-16c verschiedene Beispiele von Aktionen und Applikationen beschrieben, die vom Benutzer über die Benutzerschnittstelle 6 durch Zuführen von Inhaltsfenstern und/oder darin selektierten Datenelementen aus einem Ausgangs-Widget an ein Ziel-Widget definiert und ausgelöst werden können.

Die Figuren 14a und 14b illustrieren ein Beispiel, in welchem ein Inhaltsfenster F13 und die darin enthaltenen oder darin selektierte Datenelemente ausgehend von einem Ausgangs-Widget W13 zur weiteren Verarbeitung an eines von mehreren möglichen Ziel-Widgets W13a, W13b, W13c transferiert werden, denen jeweils eine definierte Aktion oder Applikation zugeordnet ist. Wie mit dem Pfeil P15 angedeutet ist, werden dem Benutzer die verschiedenen möglichen Ziel-Widgets W13a, W13b, W13c hinter dem Ausgangs-Widget W13 kaskadiert, d.h. dachziegelartig hintereinander gestapelt, dargestellt, wenn der Benutzer das zu bearbeitende Inhaltsfenster F13 respektive die darin selektierten Datenelemente aus dem Ausgangs-Widget W13 herausbewegt, ohne es dabei auf der Arbeitsfläche A respektive auf dem im Informationsbereich 62 dargestellten Ausschnitt A' zu positionieren. Die möglichen Ziel-Widgets W13a, W13b, W13c werden dem Benutzer beispielsweise so präsentiert, das alternierend jeweils eines zuvorderst in der Kaskade angeordnet und für den Benutzer ohne Abdeckung durch andere Widgets sichtbar gemacht wird. Die möglichen Ziel-Widgets W13a, W13b, W13c werden abhängig vom Ausgangs-Widget W13 und/oder dem selektierten Inhaltsfenster respektive Datenelementen bestimmt, beispielsweise entsprechend einer über die Konfigurationsschnittstelle 81, 81' fest konfigurierten Zuordnung, oder abhängig von einem definierte Typ oder Klasse des Ausgangs-Widgets W13 und/oder des selektierten Inhaltsfensters respektive der selektierten Datenelemente. In der Regel umfassen die möglichen Ziel-Widgets W13a, W13b, W13c ein definiertes Widget, das eingerichtet ist, eine Kopie des darin positionierten Inhaltsfensters respektive der darin abgelegten Datenelemente zu erzeugen. Weniger generische Ziel-Widgets W13a, W13b, W13c umfassen Aktionen, Funktionen und Applikationen im grafischen Druckbereich, in der Druckprodukt weiterverarbeitenden Industrie und/oder im Bereich Logistik und Transport, die für das betreffende Inhaltsfenster respektive die betreffenden Datenelemente ausgeführt werden. Wie mit dem Pfeil 15 angedeutet ist, kann der Benutzer durch Bewegen des selektierten Inhaltsfensters F13 respektive der selektierten Datenelemente in oder auf das gewünschte Ziel-Widget W13c die Zuordnung und die Verarbeitung der Datenelementen zum respektive im Ziel-Widget W13c auslösen. Das Ziel-Widget W13c über das die selektierten Datenelemente vom Benutzer bewegt werden, wird vom Schnittstellenmodul 9 jeweils zuvorderst für den Benutzer vollständig sichtbar angezeigt. Durch Loslassen und Positionieren des selektierten Inhaltsfensters F13 respektive der selektierten Datenelemente im ausgewählten Ziel-Widget 13c wird deren Zuordnung und Verarbeitung definitiv ausgelöst. Wie in der Figur 14b schematisch dargestellt ist, wird im Navigationsbereich 61 die Lage des ausgewählten Ziel-Widgets W13c, in dem die selektierten Datenelemente verarbeitet werden, durch Markierung (hier fett) des entsprechenden miniaturisiert dargestellten Widgets W13c* angezeigt. Wenn das ausgewählte Ziel-Widget W13c vorher nicht aktiv war, wird es nun aus dem Widget-Inventar 610 der inaktiven Widgets entfernt.

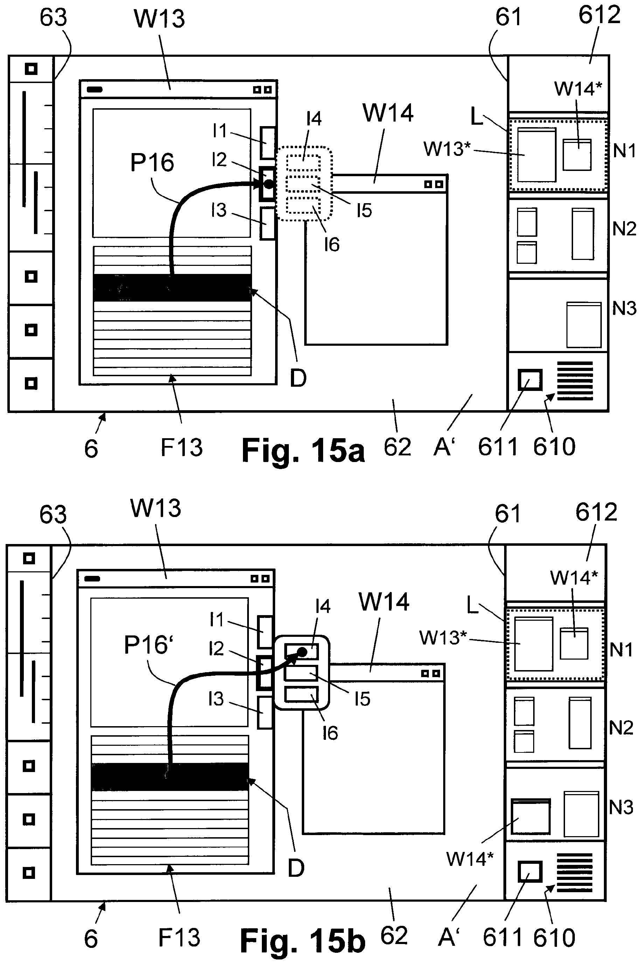

Im Beispiel der Figuren 15a-15c umfasst das Ausgangs-Widget W13 für den Benutzer sichtbare Indikatoren I1, I2, I3 von anderen Widgets, die als mögliche Ziel-Widgets W14 mit dem Ausgangs-Widget W13 verbunden respektive über eine logische Zuordnung verknüpft sind. Diese Indikatoren sind beispielsweise als grafische Symbole ("icons") und/oder lesbare Bezeichnungen ausgestaltet. Wie mit dem Pfeil P16 angedeutet ist, werden dem Benutzer mögliche Verarbeitungsaktionen eines Ziel-Widgets W13 dargestellt, wenn er vom Ausgangs-Widget ein Inhaltsfenster F13 oder darin selektierte Datenelemente D über einen Indikator I1, I2, I3 eines ausgewählten Ziel-Widgets 14 bewegt. Die möglichen Verarbeitungsaktionen des Ziel-Widgets W13 werden dem Benutzer beispielsweise wiederum als sichtbare Indikatoren I4, I5, I6 in Form von grafischen Symbolen und/oder lesbaren Bezeichnungen angezeigt. Wenn der Benutzer das Inhaltsfenster F13 respektive die darin selektierten Datenelemente D, wie mit dem Pfeil P16' angedeutet, zum Indikator I4 der gewünschten Verarbeitungsaktion weiterbewegt ("drag") und sie dort positioniert ("drop"), wird das Inhaltsfenster F13 respektive die darin selektierten Datenelemente D dem Ziel-Widget W14 zur Verarbeitung gemäss der durch den betreffenden Indikator I4 bestimmten Verarbeitungsaktion übergeben. Wie in der Figur 15b schematisch dargestellt ist, wird im Navigationsbereich 61 die Lage des ausgewählten Ziel-Widgets W14, in dem die selektierten Datenelemente verarbeitet werden, durch Markierung (hier fett) des entsprechenden miniaturisiert dargestellten Widgets W14* angezeigt. Wenn das ausgewählte Ziel-Widget W14 vorher nicht aktiv war, wird es nun aus dem Widget-Inventar 610 der inaktiven Widgets entfernt.

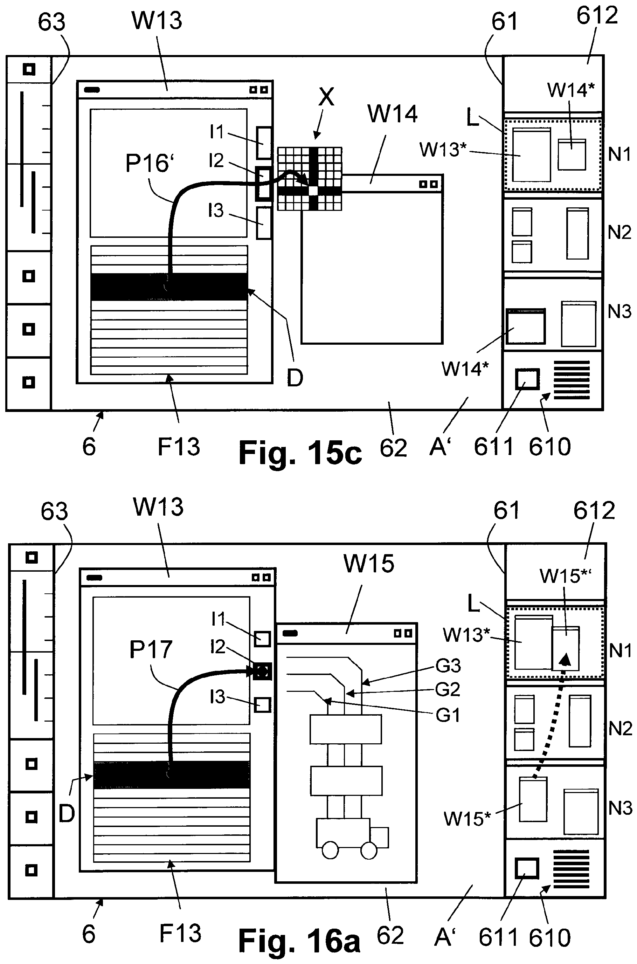

In der Figur 15c wird eine Variante illustriert, in der die Zuordnung des Inhaltsfensters F13 respektive der darin gewählten Datenelemente D zu einer selektierbaren Verarbeitungsaktion des ausgewählten Ziel-Widgets W14 durch den Benutzer über eine vom Schnittstellenmodul 9 angezeigte Ablagematrix X bestimmt wird. Die Ablagematrix X umfasst vorzugsweise zwei kombinierbare Kriterien zur Bestimmung der Verarbeitungsaktion durch Positionierung des Inhaltsfensters F13 respektive der darin gewählten Datenelemente D in einer entsprechend ausgewählten Zelle der Matrix, wobei die beiden Kriterien auf die Zeilen respektive Spalten der Matrix X abgebildet sind. Zum Beispiel bestimmt die Zeilenposition einen Produktionszeitpunkt und die Spaltenposition einen bestimmten Produktionsfall oder Produktionsweg in der Produktionsanlage 1, so dass mit einer entsprechenden Positionierung in der Ablagematrix X die Verarbeitung der Datenelemente des Inhaltsfensters F13 sowohl einem bestimmten Produktionszeitfenster als auch einem bestimmten Produktionsfall zugeordnet werden kann. Wiederum wird im Navigationsbereich 61 die Lage des ausgewählten Ziel-Widgets W14 markiert und das Ziel-Widget W14 gegebenenfalls aus dem Widget-Inventar 610 der inaktiven Widgets entfernt.

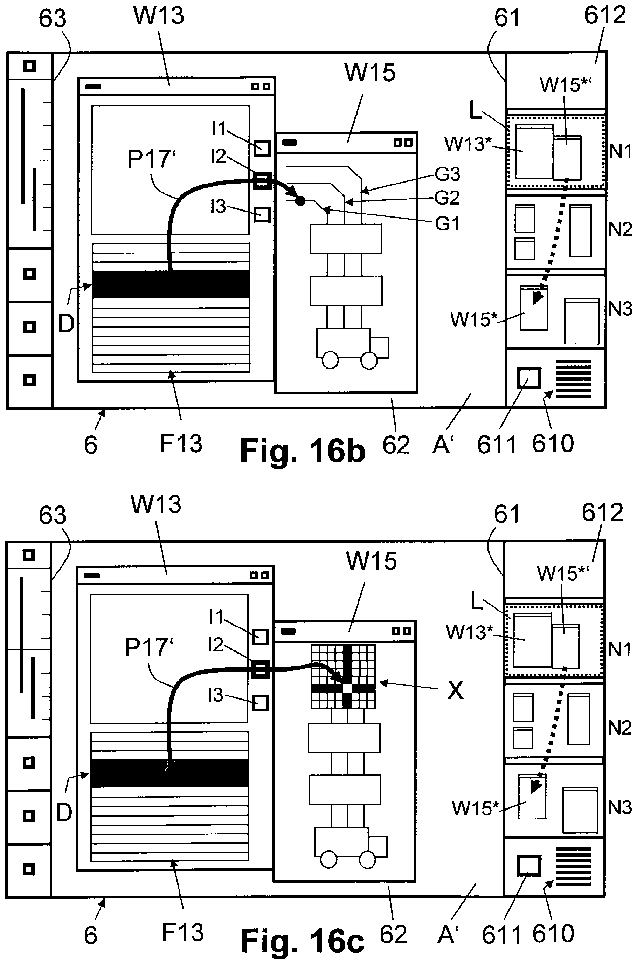

In den Figuren 16a-16c werden weitere Beispiele für die Zuordnung des Inhaltsfensters F13 respektive der darin gewählten Datenelemente D zu einer bestimmten Verarbeitungsaktion eines ausgewählten Ziel-Widgets W14 illustriert. Wie in der Figur 16a dargestellt ist, wird das Ziel-Widget W15, das durch den Benutzer wie mit dem Pfeil P17 angedeutet durch Positionierung des Inhaltsfensters F13 respektive der darin gewählten Datenelemente D über dem Indikator I2 bestimmt wird, an das Ausgangs-Widget W13 angereiht oder grafisch angedockt. Wenn das Ziel-Widget W15, wie im Navigationsbereich 61 durch die miniaturisierte Darstellung des Widgets W15* im Navigationsteilbereich N3 angedeutet, bereits schon aktiv auf der Arbeitsfläche A ist, wird es, wie mit dem gestrichelten Pfeil im Navigationsbereich 61 angedeutet, von seiner ursprünglichen Lage im Navigationsteilbereich N3 in den Navigationsteilbereich N1 verschoben, oder zumindest temporär angezeigt, und dort als miniaturisiert dargestelltes Ziel-Widget W15*' an die miniaturisierte Darstellung des Ausgangs-Widgets W13* angedockt dargestellt. Wie in den Figuren 16a-16c ersichtlich ist, sind die möglichen Verarbeitungsaktionen im Ziel-Widget 15 grafisch dargestellt, beispielsweise als grafische Symbole G1, G2, G3 von Zuführpunkten zu verschiedenen Produktionslinien, Produktionsfällen, Förderern, Produktauslieferungsrouten, etc. Wenn der Benutzer das Inhaltsfenster F13 respektive die darin selektierten Datenelemente D, wie mit dem Pfeil P17' angedeutet, zum grafischen Symbol G1 der gewünschten Verarbeitungsaktion weiterbewegt ("drag") und sie dort positioniert ("drop"), wird das Inhaltsfenster F13 respektive die darin selektierten Datenelemente D dem Ziel-Widget W15 zur Verarbeitung gemäss der durch das betreffende grafische Symbol G1 bestimmten Verarbeitungsaktion übergeben. Wie in der Figur 16b schematisch durch den gestrichelten Pfeil im Navigationsbereich 61 dargestellt ist, wird nach der erfolgten Übergabe der Datenelemente an das Ziel-Widget W15 die miniaturisierte Darstellung des angedockten Ziel-Widgets W15*' wieder zurück an die ursprüngliche Position des miniaturisierten Ziel-Widgets W15* verschoben, respektive die temporäre Darstellung des angedockten Ziel-Widgets W15*' beendet. Wenn das ausgewählte Ziel-Widget W15 vorher nicht aktiv war, wird es nun aus dem Widget-Inventar 610 der inaktiven Widgets entfernt.

Im Beispiel der Figur 16c erfolgt die Zuweisung und Übergabe des Inhaltsfensters F13 respektive der darin gewählten Datenelemente D zur selektierbaren Verarbeitungsaktion des ausgewählten Ziel-Widgets W15 nicht über die grafischen Symbole G1, G2, G3 sondern über eine vom Schnittstellenmodul 9 angezeigte Ablagematrix X wie oben im Zusammenhang mit Figur 15c beschrieben wurde, wobei die betreffenden Datenelemente, wie mit dem Pfeil 17' angedeutet wird, durch den Benutzer einer bestimmten Zelle der Ablagematrix X zugewiesen wird.

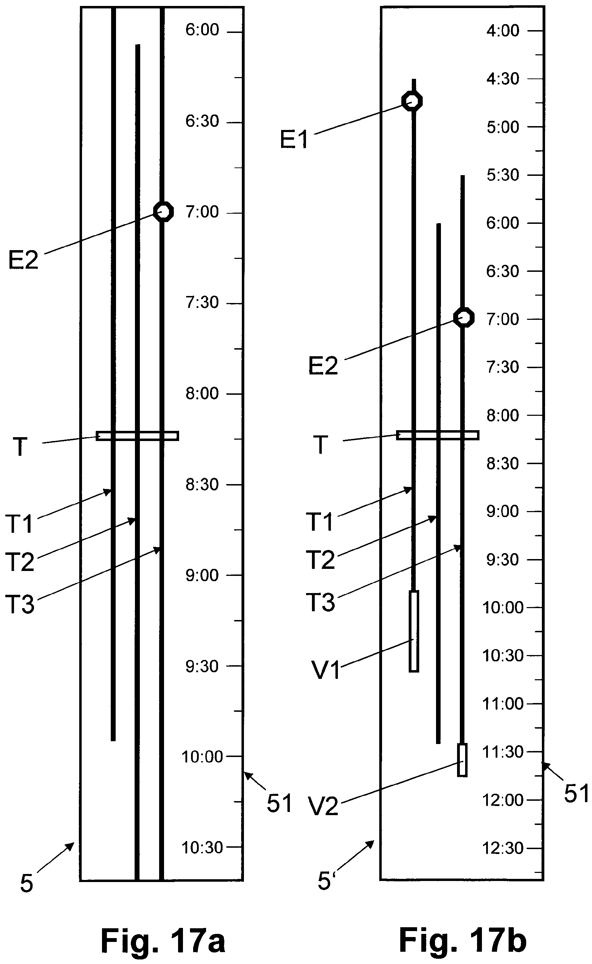

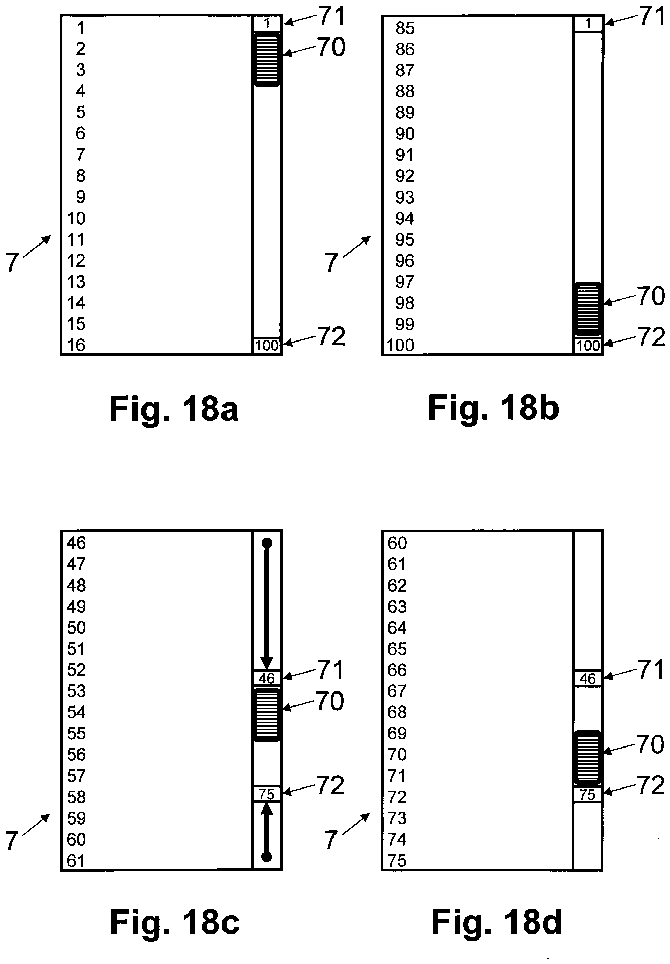

Die Figuren 17a, 17b und 18a-18d illustrieren Beispiele von Inhaltsfenstern respektive Datenfenstern, die in der Benutzerschnittstelle 6 grafisch darstellbar sind und die eingerichtet sind, einen vom Benutzer variabel einstellbaren Datenbereich anzuzeigen.

Im Beispiel der Figuren 17a und 17b ist der Datenbereich durch den Benutzer durch Wahl einer bestimmten Skalierung einstellbar, so dass abhängig von der Skalierung im Inhaltsrespektive Datenfenster 5, 5' ein unterschiedlich grosser Ausschnitt einer Werteskala 51 mit entsprechend unterschiedlicher Auflösung, unterschiedlichem Detailgehalt und/oder unterschiedlichem Massstab dargestellt wird. Die Skalierung ist vom Benutzer durch Eingabe eines Skalierungsparameters einstellbar, beispielsweise durch ein grafisches Bedienungselement wie ein Schieber, ein verschiebbarer Reiter, ein rotierbares Drehrad oder über eine Eingabemaske, oder in einer berührungsempfindlichen Anzeige 60 durch entsprechende Fingermanipulationen, z.B. durch Auseinanderbewegen respektive Zusammenführen zweier auf der Anzeige 60 positionierter Fingerspitzen. In einer bevorzugten Ausführung ist das skalierbare Inhalts- respektive Datenfenster 5, 5' der Figuren 17a, 17b als Zeitleiste 631 zur Darstellung mehrerer grafisch repräsentierter Zeitabschnitte T1, T2, T3 in einem skalierbaren Zeitfenster eingerichtet. Die Zeitabschnitte T1, T2, T3 repräsentieren beispielsweise geplante und/oder aktuelle Produktionen der Produktionsanlage 1. Wie in den Figuren 17a und 17b ersichtlich ist, ist der aktuelle Zeitpunkt T im Inhalts- respektive Datenfenster 5, 5' angezeigt, beispielsweise durch ein grafisches Symbol, ein geometrisches Element oder eine bestimmte Farbmarkierung. Die Figur 17a zeigt das Inhalts- respektive Datenfenster 5 bei einer hochauflösenden Skalierung, in welcher der Zeitbereich zwischen 5:45h und 10:45h dargestellt wird. In der Auflösung im Beispiel der Figur 17a sind die Zeitabschnitte T1, T2, T3 für den Benutzer nicht vollständig im Inhalts- respektive Datenfenster 5 sichtbar. Die Figur 17b zeigt das Inhalts- respektive Datenfenster 5' bei einer vergleichsweise geringer auflösenden Skalierung, in welcher ein grösserer Zeitbereich zwischen 3:45h und 12:45h dargestellt wird. Die Skalierung im Beispiel der Figur 17b ermöglicht ein vollständige Darstellung der Zeitabschnitte T1, T2, T3.

Die Bezugszeichen E1, E2 bezeichnen zeitliche Ereignisse um 04:45h respektive 07:00h, beispielsweise eingetretene Störungen, Ausfälle oder Unterbrechungen der Produktionsanlage 1, die auf den Zeitabschnitten T1, T2, T3 vom Schnittstellenmodul 9 zeitgenau grafisch dargestellt werden. Die Bezugszeichen V1, V2 bezeichnen zeitliche Verzögerungen um ca. 50 Minuten respektive ca. 20 Minuten, die beispielsweise in der laufenden Produktion auf Grund der Ereignisse E1, E2 erwartet werden, und die auf den Zeitabschnitten T1, T2, T3 grafisch dargestellt respektive hervorgehoben werden. Das Schnittstellenmodul 9 ist so eingerichtet, dass es dem Benutzer beispielsweise beim Anklicken oder Berühren der Zeitabschnitte T1, T2, T3, der Ereignisse E1, E2 und/oder der erwarteten zeitlichen Verzögerungen V1, V2 in der Benutzerschnittstelle 6 weitere Detailinformationen anzeigt.

Im Beispiel der Figuren 18a-18d weist das Inhalts- respektive Datenfenster 7 ein grafisches Element auf, insbesondere einen Schieber 70, zum vertikalen Verschieben ("scroll") des zusammenhängenden Bereichs von anzuzeigenden Datenzeilen. Im Beispiel der Figur 18a ist der Schieber 70 in der obersten Position eingestellt, so dass dem Benutzer entsprechend die zu oberst respektive am Anfang angeordneten Datenzeilen eines Datenarrays oder eines Datenfiles im Inhalts- respektive Datenfenster 7 angezeigt werden, welche im vorliegenden Beispiel mit den Ziffern 1 bis 16 markiert sind. Im Beispiel der Figur 18b ist der Schieber 70 in der untersten Position eingestellt, so dass dem Benutzer entsprechend die zu unterst respektive am Ende angeordneten Datenzeilen eines Datenarrays oder eines Datenfiles im Inhalts- respektive Datenfenster 7 angezeigt werden, welche im vorliegenden Beispiel mit den Ziffern 85 bis 100 markiert sind. Wie in den Figuren 18a-18d schematisch illustriert ist, ist das Inhalts- respektive Datenfenster 7 mit angezeigten Bereichsgrenzen 71, 72 versehen, welche den verschieb- und darstellbaren Datenbereich bestimmen. Im Beispiel der Figuren 18a und 18b sind die Bereichsgrenzen 71, 72 auf die Maximalwerte "1" respektive "100" gesetzt, so dass im Inhalts- respektive Datenfenster 7 durch entsprechende Einstellungen des Schiebers 70 der gesamte Datenbereich mit sämtlichen Datenzeilen 1-100 einsehbar ist. Durch Setzen der Bereichsgrenzen 71, 72 kann der Benutzer den verschieb- und darstellbaren Datenbereich einstellen, so dass abhängig von den Bereichsgrenzen 71, 72 im Inhalts- respektive Datenfenster 7 ein unterschiedlicher Bereich und eine unterschiedliche Anzahl von Datenzeilen einsehbar und verschiebbar ("scrollable") sind. Im Beispiel der Figuren 18c und 18d sind die Bereichsgrenzen 71, 72 auf die Werte "46" respektive "75" eingestellt, so dass im Inhalts- respektive Datenfenster 7 durch entsprechende Einstellungen des Schiebers 70 der Datenbereich mit den Datenzeilen 46-75 einsehbar ist. Im Beispiel der Figur 18c ist der Schieber in der obersten Position des begrenzten Bereichs eingestellt, so dass dem Benutzer im Inhalts- respektive Datenfenster 7 entsprechend die Datenzeilen 46-61 angezeigt werden. Im Beispiel der Figur 18d ist der Schieber in der untersten Position des begrenzten Bereichs eingestellt, so dass dem Benutzer im Inhalts- respektive Datenfenster 7 entsprechend die Datenzeilen 60-75 angezeigt werden. Wie in den Figuren 18c und 18d illustriert ist sind die Bereichsgrenzen 71, 72 beispielsweise durch Verschieben von entsprechenden grafisch dargestellten Reitern ein- und darstellbar, oder durch Eingabe der Bereichgrenzen in Dateneingabefelder.

Der Fachmann wird verstehen, dass die Inhalts- respektive Datenfenster 5, 5', 7 nicht wie in den Figuren 17a, 17b und 18a-18d dargestellt bloss vertikal, sondern auch horizontal ausgerichtet sein können.

Abschliessend soll angeführt werden, dass in der Beschreibung zwar Computerprogrammcode spezifischen funktionalen Modulen zugeordnet wurde und dass die Ausführung von Schritten teilweise in einer bestimmten Reihenfolge beschrieben wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen.

## Patentansprüche

1. Computerisierte Vorrichtung umfassend ein computerlesbares Medium mit darauf gespeichertem Computerprogrammcode zur Steuerung eines oder mehrerer Prozessoren der computerisierten Vorrichtung, derart, dass die Prozessoren zum Konfigurieren grafischer Benutzerschnittstellen (6) für Anzeigen (60) verschiedener Endgeräte (31 - 38), folgende Schritte ausführen:
Darstellen einer grafischen Konfigurationsschnittstelle (81, 81'),welche eine Darstellung eines Navigationsbereichs (61') enthaltend eine miniaturisierte Darstellung einer Arbeitsfläche der grafischen Benutzerschnittstellen (6) umfasst, wobei die Konfigurationsschnittstelle (81, 81') einen als grafische Symbole oder Liste mit Bezeichnungen dargestellten Widget-Katalog (K) mit Widgets (W) umfasst,
Entgegennehmen von Konfigurationsinstruktionen zum Selektieren von Widgets (W) und zum Anordnen der Widgets (W) in der Arbeitsfläche (A) durch Positionieren von miniaturisierten Darstellungen der Widgets in der miniaturisiert dargestellten Arbeitsfläche, wobei mehrere Navigationsteilbereiche (N1, N2, N3) des Navigationsbereichs der grafischen Benutzerschnittstellen (6) dargestellt sind, in welchen jeweils ein zugeordneter Teil der Arbeitsfläche und die darauf angeordneten Widgets (W) miniaturisiert dargestellt sind,
Entgegennehmen von Konfigurationsinstruktionen zum selektiven Zuordnen zu den Endgeräten (31-38) von Navigationsteilbereichen (N1, N2, N3), und
Konfigurieren der grafischen Benutzerschnittstellen (6) zum Darstellen auf einer Anzeige (60) von jeweils einem der Endgeräte (31 -38) basierend auf den für das betreffende Endgerät (31-38) zugeordneten Navigationsteilbereichen (N1, N2, N3) und den den Navigationsteilbereichen (N1, N2, N3) jeweils zugeordneten Teilen der Arbeitsfläche und den darauf angeordneten Widgets (W),
**dadurch gekennzeichnet,**
**dass** die Navigationsteilbereiche (N1, N2, N3) so gekoppelt werden, dass bei einer Bewegung eines Widgets durch den Benutzer von einem der Navigationsteilbereiche (N1, N2, N3) in einen anderen der Navigationsteilbereiche (N1, N2, N3) die Zulässigkeit der Positionierung des Widgets im anderen der Navigationsteilbereiche (N1, N2, N3) gemäss gespeicherten Regeln überprüft wird, und die Bewegung des Widgets zurückgewiesen wird, wenn die Zulässigkeit der Positionierung des Widgets im anderen der Navigationsteilbereiche (N1, N2, N3) nicht gegeben ist.

2. Vorrichtung nach Anspruch 1, **dadurch gekennzeichnet, dass** der Computerprogrammcode eingerichtet ist, die Prozessoren derart zu steuern, dass die grafischen Benutzerschnittstellen (6) mit einem Informationsbereich (62) zum Darstellen eines Ausschnitts (A') der jeweils dem betreffenden Endgerät (31-38) zugewiesenen Navigationsteilbereichen (N1, N2, N3) generiert werden, wobei der Navigationsbereich (61) im Vergleich zum Informationsbereich (62) wesentlich kleiner generiert wird und ausserhalb des Informationsbereichs (62) angeordnet wird, wobei der Navigationsbereich (61) jeweils eine miniaturisierte Darstellung der Arbeitsfläche mit sämtlichen dem betreffenden Endgerät (31-38) zugewiesenen Navigationsteilbereichen (N1, N2, N3) und den darauf angeordneten Widgets umfasst, und wobei der Navigationsbereich (61) und der Informationsbereich (62) über einen im Navigationsbereich (61) bewegbaren Auswahlindikator (L) so gekoppelt werden, dass ein im Navigationsbereich (61) durch den Auswahlindikator (L) bestimmter Auswahlbereich der miniaturisiert dargestellten Arbeitsfläche dem im Informationsbereich (62) dargestellten Ausschnitt (A') der Arbeitsfläche (A) entspricht.

3. Vorrichtung nach Anspruch 2, **dadurch gekennzeichnet, dass** der Computerprogrammcode eingerichtet ist, die Prozessoren derart zu steuern, dass die Navigationsteilbereiche (N1, N2, N3) so generiert werden, dass miniaturisiert dargestellte Widgets (W1* bis W5*, W10* bis W13*) durch den Benutzer von einem der Navigationsteilbereiche (N1, N2, N3) in einen anderen der Navigationsteilbereiche (N1, N2, N3) bewegbar sind, und dass die Navigationsteilbereiche (N1, N2, N3) und der Informationsbereich (62) so gekoppelt werden, dass eine Positionierung eines miniaturisiert dargestellten Widgets (W1* bis W5*, W10* bis W13*) auf der miniaturisierten Darstellung eines Navigationsteilbereichs (N1, N2, N3) eine entsprechende Positionierung des betreffenden Widgets auf dem betreffenden Navigationsteilbereich (N1, N2, N3) in den Endgeräten (31-38) bewirkt, denen der betreffende Navigationsteilbereich (N1, N2, N3) zugeordnet ist.

4. Vorrichtung nach einem der Ansprüche 2 bis 3, **dadurch gekennzeichnet, dass** der Computerprogrammcode eingerichtet ist, die Prozessoren derart zu steuern, dass ein erster Navigationsteilbereich (N1) als Vorbereitungsbereich zum Definieren einer Produktionskonfiguration eines Druckproduktionssystems oder Druckproduktweiterverarbeitungssystems vorgesehen ist, dass ein zweiter Navigationsteilbereich (N2) als Produktionsbereich zur Überwachung und Steuerung einer Herstellung oder Weiterverarbeitung von Druckprodukten im Druckproduktionssystem respektive Druckproduktweiterverarbeitungssystem vorgesehen ist, und dass ein dritter Navigationsteilbereich (N3) als Verteilungsbereich zum Definieren der Auslieferung der Druckprodukte des Druckproduktionssystems respektive Druckproduktweiterverarbeitungssystems vorgesehen ist.

5. Vorrichtung nach einem der Ansprüche 1 bis 4, **dadurch gekennzeichnet, dass** der Computerprogrammcode eingerichtet ist, die Prozessoren derart zu steuern, dass Konfigurationsinstruktionen zum Definieren der Navigationsteilbereiche (N1, N2, N3) entgegengenommen werden und ein Navigationsteilbereich (N1, N2, N3) jeweils für die Endgeräte (31-38) gekoppelt oder entkoppelt definierbar ist, wobei ein gekoppelt definierter Navigationsteilbereich (N1, N2, N3) so generiert wird, dass er Änderungen im betreffenden Teil in den anderen Endgeräten (31-38) repliziert, denen der betreffende Navigationsteilbereich (N1, N2, N3) zugeordnet ist, und wobei ein entkoppelt definierter Navigationsteilbereich (N1, N2, N3) so generiert wird, dass er Änderungen im betreffenden Navigationsteilbereich (N1, N2, N3) nicht in den anderen Endgeräte (31-38) repliziert.

6. Vorrichtung nach einem der Ansprüche 2 bis 5, **dadurch gekennzeichnet, dass** der Computerprogrammcode eingerichtet ist, die Prozessoren derart zu steuern, dass eine grafische Benutzerschnittstelle (6) mit einer Kopierfunktion generiert wird, wobei die Kopierfunktion eingerichtet ist, in einem benutzergesetzten Kopiermodus beim Bewegen eines miniaturisiert dargestellten Widgets (W5*) vom Navigationsbereich (61) in den Informationsbereich (62) eine Kopie des Widgets (W5+) zu erstellen und auf einem Navigationsteilbereich (N1, N2, N3) in denjenigen Endgeräten (31-38) anzuordnen, denen der betreffende Navigationsteilbereich (N1, N2, N3) zugeordnet ist.

7. Vorrichtung nach einem der Ansprüche 2 bis 6, **dadurch gekennzeichnet, dass** der Computerprogrammcode eingerichtet ist, die Prozessoren derart zu steuern, dass Konfigurationsinstruktionen zum Zuweisen von Schnellzugriffselementen (632) zu den Endgeräten (31-38) entgegengenommen werden, dass eine grafische Benutzerschnittstelle (6) für ein Endgerät (31-38) jeweils mit zugewiesenen Schnellzugriffselementen (632) generiert wird, welche bei einer Betätigung durch den Benutzer bewirken, dass im Informationsbereich (62) ein dem betreffenden Schnellzugriffselement (632) zugeordneter definierter Bereich der Arbeitsfläche (A) und der darauf angeordneten Widgets dargestellt wird, und dass der Auswahlindikator (L) im Navigationsbereich (61) den entsprechenden Auswahlbereich der miniaturisiert dargestellten Arbeitsfläche und der entsprechenden darauf angeordneten miniaturisiert dargestellten Widgets anzeigt.

8. Vorrichtung nach einem der Ansprüche 1 bis 7, **dadurch gekennzeichnet, dass** der Computerprogrammcode eingerichtet ist, die Prozessoren derart zu steuern, dass eine grafische Benutzerschnittstelle (6) mit einem Login-Bereich (612) generiert wird, wobei der Login-Bereich (612), der Informationsbereich (62) und der Navigationsbereich (61) so gekoppelt werden, dass die Widgets (W1-W10) gemäss mindestens einem aus der folgenden Liste auf der Arbeitsfläche (A) angeordnet und im Informationsbereich (62) und Navigationsbereich (61) dargestellt werden: benutzerspezifisch gemäss gespeicherten Benutzereinstellungen, gruppenspezifisch gemäss gespeicherten Gruppeneinstellungen, und generisch gemäss gespeicherten Grundeinstellungen.

9. Vorrichtung nach einem der Ansprüche 1 bis 8, **dadurch gekennzeichnet, dass** der Computerprogrammcode eingerichtet ist, die Prozessoren derart zu steuern, dass eine grafische Benutzerschnittstelle (6) für ein Endgerät (31-38) jeweils mit einem Widget-Inventar (610) generiert wird, wobei das Widget-Inventar (610) eine Darstellung von verfügbaren aber ausschliesslich zur Zeit inaktiven, nicht auf den dem betreffenden Endgerät (31-38) zugeordneten Teilen der Arbeitsfläche (A) angeordneten Widgets umfasst, und wobei die Arbeitsfläche (A) und das Widget-Inventar so gekoppelt werden, dass ein aktives Widget durch den Benutzer von den dem betreffenden Endgerät (31-38) zugeordneten Teilen der Arbeitsfläche (A) in das Widget-Inventar (610) bewegbar ist und dabei inaktiv wird, und dass ein inaktives Widget durch den Benutzer vom Widget-Inventar (610) auf einen dem betreffenden Endgerät (31-38) zugeordneten Teil der Arbeitsfläche (A) bewegbar ist und dabei aktiv wird.

10. Computerprogrammprodukt umfassend ein computerlesbares Medium mit darauf gespeichertem Computercode zur Steuerung eines Prozessors derart, dass der Prozessor zum Konfigurieren grafischer Benutzerschnittstellen (6) für verschiedene Endgeräte (31-38) folgende Schritte ausführt:
Darstellen einer grafischen Konfigurationsschnittstelle (81, 81'),welche eine Darstellung eines Navigationsbereichs (61') enthaltend eine miniaturisierte Darstellung einer Arbeitsfläche der grafischen Benutzerschnittstellen (6) umfasst, wobei die Konfigurationsschnittstelle (81, 81') einen als grafische Symbole oder Liste mit Bezeichnungen dargestellten Widget-Katalog (K) mit Widgets (W) umfasst,
Entgegennehmen von Konfigurationsinstruktionen zum Selektieren von Widgets (W) und zum Anordnen der Widgets (W) in der Arbeitsfläche (A) durch Positionieren von miniaturisierten Darstellungen der Widgets in der miniaturisiert dargestellten Arbeitsfläche, wobei mehrere Navigationsteilbereiche (N1, N2, N3) des Navigationsbereichs der grafischen Benutzerschnittstellen (6) dargestellt sind, in welchen jeweils ein zugeordneter Teil der Arbeitsfläche und die darauf angeordneten Widgets (W) miniaturisiert dargestellt sind,
Entgegennehmen von Konfigurationsinstruktionen zum selektiven Zuordnen zu den Endgeräten (31-38) von Navigationsteilbereichen (N1, N2, N3), und
Konfigurieren der grafischen Benutzerschnittstellen (6) zum Darstellen auf einer Anzeige (60) von jeweils einem der Endgeräte (31 -38) basierend auf den für das betreffende Endgerät (31-38) zugeordneten Navigationsteilbereichen (N1, N2, N3) und den den Navigationsteilbereichen (N1, N2, N3) jeweils zugeordneten Teilen der Arbeitsfläche und den darauf angeordneten Widgets (W),
wobei die Navigationsteilbereiche (N1, N2, N3) so gekoppelt werden, dass bei einer Bewegung eines Widgets durch den Benutzer von einem der Navigationsteilbereiche (N1, N2, N3) in einen anderen der Navigationsteilbereiche (N1, N2, N3) die Zulässigkeit der Positionierung des Widgets im anderen der Navigationsteilbereiche (N1, N2, N3) gemäss gespeicherten Regeln überprüft wird, und die Bewegung des Widgets zurückgewiesen wird, wenn die Zulässigkeit der Positionierung des Widgets im anderen der Navigationsteilbereiche (N1, N2, N3) nicht gegeben ist.

## Claims

1. Computerized apparatus comprising a computer-readable medium with computer program code stored thereon for controlling one or more processors of the computerized apparatus such that the processors carry out the following steps to configure graphical user interfaces (6) for displays (60) of different terminal devices (31-38):
representing a graphical configuration interface (81, 81') comprising a representation of a navigation area (61') containing a miniaturized representation of a desktop for the graphical user interfaces (6), wherein the configuration interface (81, 81') comprises a widget catalogue (K) which is represented as graphical symbols or a list with designations and has widgets (W),
receiving configuration instructions for selecting widgets (W) and for arranging the widgets (W) in the desktop (A) by positioning miniaturized representations of the widgets in the desktop represented in a miniaturized manner, wherein a plurality of navigation part-areas (N1, N2, N3) of the navigation area of the graphical user interfaces (6), each representing in a miniaturized manner an associated part of the desktop and the widgets (W) arranged thereon, are represented,
receiving configuration instructions for selectively assigning navigation part-areas (N1, N2, N3) to the terminal devices (31-38), and
configuring the graphical user interfaces (6) for representation on a display (60) of one of the terminal devices (31-38) in each case on the basis of the navigation part-areas (N1, N2, N3) assigned for the relevant terminal device (31-38) and those parts of the desktop which are respectively assigned to the navigation part-areas (N1, N2, N3) and the widgets (W) arranged on said desktop,
**characterized**
**in that** the navigation part-areas (N1, N2, N3) are coupled such that, in the event of a movement of a widget by the user from one of the navigation part-areas (N1, N2, N3) into another of the navigation part-areas (N1, N2, N3), the permissibility of the positioning of the widget in the other of the navigation part-areas (N1, N2, N3) is checked according to stored rules, and the movement of the widget is rejected if the permissibility of the positioning of the widget in the other of the navigation part-areas (N1, N2, N3) is not manifested.

2. Apparatus according to Claim 1, **characterized in that** the computer program code is configured to control the processors such that the graphical user interfaces (6) are generated with an information area (62) for representing a section (A') of the navigation part-areas (N1, N2, N3) which are in each case assigned to the relevant terminal device(31-38), wherein the navigation area (61) is generated such that it is considerably smaller than the information area (62) and is arranged outside the information area (62), wherein the navigation area (61) in each case comprises a miniaturized representation of the desktop with all navigation part-areas (N1, N2, N3) allocated to the relevant terminal device (31-38) and with the widgets arranged thereon, and wherein the navigation area (61) and the information area (62) are coupled by means of a selection indicator (L), which is movable in the navigation area (61), such that a selection area of the desktop represented in a miniaturized manner, said selection area being determined in the navigation area (61) by the selection indicator (L), corresponds to the section (A') of the desktop (A) that is represented in the information area (62).

3. Apparatus according to Claim 2, **characterized in that** the computer program code is configured to control the processors such that the navigation part-areas (N1, N2, N3) are generated such that widgets (W1* to W5*, W10* to W13*) represented in a miniaturized manner are movable by the user from one of the navigation part-areas (N1, N2, N3) into another of the navigation part-areas (N1, N2, N3), and that the navigation part-areas (N1, N2, N3) and the information area (62) are coupled such that a positioning of a widget (W1* to W5*, W10* to W13*) represented in a miniaturized manner on the miniaturized representation of a navigation part-area (N1, N2, N3) effects a corresponding positioning of the relevant widget in the relevant navigation part-area (N1, N2, N3) on the terminal devices (31-38) to which the relevant navigation part-area (N1, N2, N3) is assigned.

4. Apparatus according to one of Claims 2 to 3, **characterized in that** the computer program code is configured to control the processors such that a first navigation part-area (N1) is provided as preparation area for defining a production configuration of a printing production system or printed-product further processing system, that a second navigation part-area (N2) is provided as production area for monitoring and controlling production or further processing of printed products in the printing production system or printed-product further processing system, respectively, and that a third navigation part-area (N3) is provided as distribution area for defining the delivery of the printed products of the printing production system or printed-product further processing system, respectively.

5. Apparatus according to one of Claims 1 to 4, **characterized in that** the computer program code is configured to control the processors such that configuration instructions for defining the navigation part-areas (N1, N2, N3) are received and a navigation part-area (N1, N2, N3) is in each case definable as coupled or decoupled for the terminal devices (31-38), wherein a navigation part-area (N1, N2, N3) that is defined as coupled is generated such that it replicates changes in the relevant part in the other terminal devices (31-38) to which the relevant navigation part-area (N1, N2, N3) is assigned, and wherein a navigation part-area (N1, N2, N3) defined as decoupled is generated such that it does not replicate changes in the relevant navigation part-area (N1, N2, N3) in the other terminal devices (31-38).

6. Apparatus according to one of Claims 2 to 5, **characterized in that** the computer program code is configured to control the processors such that a graphical user interface (6) is generated with a copying function, wherein the copying function is configured to create a copy of the widget (W5+) in a user-set copying mode upon the movement of a widget (W5*) represented in a miniaturized manner from the navigation area (61) into the information area (62) and to arrange said copy in a navigation part-area (N1, N2, N3) in those terminal devices (31-38) to which the relevant navigation part-area (N1, N2, N3) is assigned.

7. Apparatus according to one of Claims 2 to 6, **characterized in that** the computer program code is configured to control the processors such that configuration instructions for allocating rapid-access elements (632) to the terminal devices (31-38) are received, that a graphical user interface (6) for a terminal device (31-38) is generated in each case with assigned rapid-access elements (632) which, upon actuation by the user, have the effect that a defined area of the desktop (A) that is assigned to the relevant rapid-access element (632) and of the widgets arranged thereon is represented in the information area (62), and that the selection indicator (L) indicates in the navigation area (61) the corresponding selection area of the desktop represented in a miniaturized manner and of the corresponding widgets represented in a miniaturized manner that are arranged thereon.

8. Apparatus according to one of Claims 1 to 7, **characterized in that** the computer program code is configured to control the processors such that a graphical user interface (6) is generated with a login area (612), wherein the login area (612), the information area (62) and the navigation area (61) are coupled such that the widgets (W1-W10) are arranged on the desktop (A) and represented in the information area (62) and navigation area (61) according to at least one from the following list: user-specifically according to stored user settings, group-specifically according to stored group settings and generically according to stored basic settings.

9. Apparatus according to one of Claims 1 to 8, **characterized in that** the computer program code is configured to control the processors such that a graphical user interface (6) for a terminal device(31-38) is in each case generated with a widget inventory (610), wherein the widget inventory (610) comprises a representation of available, but currently exclusively inactive, widgets not arranged on the parts of the desktop (A) that are assigned to the relevant terminal device (31-38), and wherein the desktop (A) and the widget inventory are coupled such that an active widget is movable by the user from the parts of the desktop (A) that are assigned to the relevant terminal device (31-38) into the widget inventory (610) and during this process becomes inactive, and that an inactive widget is movable by the user from the widget inventory (610) onto a part of the desktop (A) that is assigned to the relevant terminal device (31-38), and during this process becomes active.

10. A computer program product comprising a computer-readable medium with computer code stored thereon for controlling a processor such that the processor carries out the following steps for the purpose of configuring graphical user interfaces (6) for different terminal devices (31-38):
representing a graphical configuration interface (81, 81') comprising a representation of a navigation area (61') containing a miniaturized representation of a desktop for the graphical user interfaces (6), wherein the configuration interface (81, 81') comprises a widget catalogue (K) which is represented as graphical symbols or a list with designations and has widgets (W),
receiving configuration instructions for selecting widgets (W) and for arranging the widgets (W) in the desktop (A) by positioning miniaturized representations of the widgets in the desktop represented in a miniaturized manner, wherein a plurality of navigation part-areas (N1, N2, N3) of the navigation area of the graphical user interfaces (6), each representing in a miniaturized manner an associated part of the desktop and the widgets (W) arranged thereon, are represented,
receiving configuration instructions for selectively assigning navigation part-areas (N1, N2, N3) to the terminal devices (31-38), and
configuring the graphical user interfaces (6) for representation on a display (60) of one of the terminal devices (31-38) in each case on the basis of the navigation part-areas (N1, N2, N3) assigned for the relevant terminal device (31-38) and those parts of the desktop which are respectively assigned to the navigation part-areas (N1, N2, N3) and the widgets (W) arranged on said desktop,
wherein the navigation part-areas (N1, N2, N3) are coupled such that, in the event of a movement of a widget by the user from one of the navigation part-areas (N1, N2, N3) into another of the navigation part-areas (N1, N2, N3), the permissibility of the positioning of the widget in the other of the navigation part-areas (N1, N2, N3) is checked according to stored rules, and the movement of the widget is rejected if the permissibility of the positioning of the widget in the other of the navigation part-areas (N1, N2, N3) is not manifested.

## Revendications

1. Dispositif informatisé comprenant un support lisible par ordinateur sur lequel est enregistré un code de programme informatique destiné à commander un ou plusieurs processeurs du dispositif informatisé de telle sorte que les processeurs exécutent les étapes suivantes en vue de configurer des interfaces utilisateur graphiques (6) pour des afficheurs (60) de différents terminaux (31 - 38) :
représentation d'une interface de configuration (81, 81') graphique, laquelle comporte une représentation d'une zone de navigation (61') contenant une représentation miniaturisée d'une surface de travail de l'interface utilisateur graphique (6), l'interface de configuration (81, 81') comportant un catalogue de vignettes actives (K) avec des vignettes actives (W) représenté sous la forme de symboles graphiques ou d'une liste avec des désignations,
acceptation d'instructions de configuration en vue de la sélection de vignettes actives (W) et en vue de disposer les vignettes actives (W) dans la surface de travail (A) par positionnement de représentations miniaturisées des vignettes actives dans la surface de travail représentée miniaturisée, plusieurs zones partielles de navigation (N1, N2, N3) de la zone de navigation de l'interface utilisateur graphique (6) étant représentées, dans lesquelles une partie associée de la surface de travail ainsi que les vignettes actives (W) disposées sur celle-ci sont respectivement représentées miniaturisées,
acceptation d'instructions de configuration en vue de l'association sélective de zones partielles de navigation (N1, N2, N3) aux terminaux (31 - 38), et
configuration des interfaces utilisateur graphiques (6) en vue de représenter sur un afficheur (60) de l'un des terminaux (31 - 38) respectif, en se basant sur les zones partielles de navigation (N1, N2, N3) associées au terminal (31 - 38) concerné et les parties de la surface de travail respectivement associées aux zones partielles de navigation (N1, N2, N3) et les vignettes actives (W) disposées sur celles-ci,
**caractérisé en ce**
**que** les zones partielles de navigation (N1, N2, N3) sont couplées de telle sorte que dans le cas d'un déplacement d'une vignette active par un utilisateur de l'une des zones partielles de navigation (N1, N2, N3) dans une autre des zones partielles de navigation (N1, N2, N3), l'admissibilité du positionnement de la vignette active dans l'autre des zones partielles de navigation (N1, N2, N3) est contrôlée conformément à des règles mémorisées, et le déplacement de la vignette active est refusé si l'admissibilité du positionnement de la vignette active dans l'autre des zones partielles de navigation (N1, N2, N3) n'est pas donnée.

2. Dispositif selon la revendication 1, **caractérisé en ce que** le code de programme informatique est conçu pour commander les processeurs de telle sorte que les interfaces utilisateur graphiques (6) sont générées avec une zone d'information (62) destinée à représenter une portion (A') des zones partielles de navigation (N1, N2, N3) respectivement affectées au terminal (31 - 38) concerné, la zone de navigation (61) étant générée nettement plus petite en comparaison de la zone d'information (62) et étant disposée en-dehors de la zone d'information (62), la zone de navigation (61) comportant respectivement une représentation miniaturisée de la surface de travail avec toutes les zones partielles de navigation (N1, N2, N3) affectées au terminal (31 - 38) concerné et les vignettes actives qui sont disposées sur celles-ci, et la zone de navigation (61) et la zone d'information (62) étant couplées par le biais d'un indicateur de sélection (L) pouvant être déplacé dans la zone de navigation (61) de telle sorte qu'une zone de sélection déterminée dans la zone de navigation (61) par l'indicateur de sélection (L) correspond à la surface de travail représentée miniaturisée de la portion (A') représentée dans la zone d'information (62) de la surface de travail (A).

3. Dispositif selon la revendication 2, **caractérisé en ce que** le code de programme informatique est conçu pour commander les processeurs de telle sorte que les zones partielles de navigation (N1, N2, N3) sont générées de telle sorte que des vignettes actives représentées miniaturisées (W1* à W5*, W10* à W13*) peuvent être déplacées par l'utilisateur de l'une des zones partielles de navigation (N1, N2, N3) dans une autre des zones partielles de navigation (N1, N2, N3), et **en ce que** les zones partielles de navigation (N1, N2, N3) et la zone d'information (62) sont couplées de telle sorte qu'un positionnement d'une vignette active représentée miniaturisée (W1* à W5*, W10* à W13*) sur la représentation miniaturisée d'une zone partielle de navigation (N1, N2, N3) produit un positionnement correspondant de la vignette active concernée sur la zone partielle de navigation (N1, N2, N3) concernée dans les terminaux (31 - 38) auxquels est associée la zone partielle de navigation (N1, N2, N3) concernée.

4. Dispositif selon l'une des revendications 2 à 3, **caractérisé en ce que** le code de programme informatique est conçu pour commander les processeurs de telle sorte qu'une première zone partielle de navigation (N1) est prévue en tant que zone de préparation pour définir une configuration de production d'un système de production imprimée ou d'un système de post-traitement de produit imprimé, **en ce qu'**une deuxième zone partielle de navigation (N2) est prévue en tant que zone de production servant à la surveillance et à la commande d'une fabrication ou d'un post-traitement de produits imprimés dans le système de production imprimée et/ou le système de post-traitement de produit imprimé, et **en ce qu'**une troisième zone partielle de navigation (N3) est prévue en tant que zone de distribution destinée à définir la livraison des produits imprimés du système de production imprimée et/ou du système de post-traitement de produit imprimé.

5. Dispositif selon l'une des revendications 1 à 4, **caractérisé en ce que** le code de programme informatique est conçu pour commander les processeurs de telle sorte que des instructions de configuration destinées à définir les zones partielles de navigation (N1, N2, N3) sont acceptées et une zone partielle de navigation (N1, N2, N3) peut respectivement être définie couplée ou découplée pour les terminaux (31 - 38), une zone partielle de navigation (N1, N2, N3) définie couplée étant générée de telle sorte qu'elle réplique les modifications dans la partie concernée dans les autres terminaux (31 - 38) auxquels est associée la zone partielle de navigation (N1, N2, N3) concernée, et une zone partielle de navigation (N1, N2, N3) définie découplée étant générée de telle sorte qu'elle ne réplique pas dans les autres terminaux (31 - 38) les modifications dans la zone partielle de navigation (N1, N2, N3) concernée.

6. Dispositif selon l'une des revendications 2 à 5, **caractérisé en ce que** le code de programme informatique est conçu pour commander les processeurs de telle sorte qu'une interface utilisateur graphique (6) avec une fonction de copie est générée, la fonction de copie étant conçue pour, dans un mode de copie activé par l'utilisateur, lors des déplacements d'une vignette active représentée miniaturisée (W5*) de la zone de navigation (61) dans la zone d'information (62), créer une copie de la vignette active (W5+) et la disposer sur une zone partielle de navigation (N1, N2, N3) dans les terminaux (31 - 38) auxquels est associée la zone partielle de navigation (N1, N2, N3) concernée.

7. Dispositif selon l'une des revendications 2 à 6, **caractérisé en ce que** le code de programme informatique est conçu pour commander les processeurs de telle sorte que des instructions de configuration destinées à affecter des éléments d'accès rapide (632) aux terminaux (31 - 38) sont acceptées, **en ce qu'**une interface utilisateur graphique (6) est générée pour un terminal (31 - 38) respectivement avec des éléments d'accès rapide (632) affectés qui, lors d'un actionnement par l'utilisateur, ont pour effet qu'une zone définie, associée à l'élément d'accès rapide (632) concerné, de la surface de travail (A) et des vignettes actives disposées sur celle-ci est représentée dans la zone d'information (62), et **en ce que** l'indicateur de sélection (L) affiche dans la zone de navigation (61) la zone de sélection correspondante de la surface de travail représentée miniaturisée et les vignettes actives représentées miniaturisées correspondantes disposées sur celle-ci.

8. Dispositif selon l'une des revendications 1 à 7, **caractérisé en ce que** le code de programme informatique est conçu pour commander les processeurs de telle sorte qu'une interface utilisateur graphique (6) avec une zone d'ouverture de session (612) est générée, la zone d'ouverture de session (612), la zone d'information (62) et la zone de navigation (61) étant couplées de telle sorte que les vignettes actives (W1 - W10) sont disposées sur la surface de travail (A) et représentées dans la zone d'information (62) et dans la zone de navigation (61) conformément à au moins l'un des éléments de la liste suivante : spécifiquement à l'utilisateur conformément à des réglages d'utilisateur mémorisés, spécifiquement à un groupe conformément à des réglages de groupe mémorisés, et de manière générique conformément à des réglages de base mémorisée.

9. Dispositif selon l'une des revendications 1 à 8, **caractérisé en ce que** le code de programme informatique est conçu pour commander les processeurs de telle sorte qu'une interface utilisateur graphique (6) pour un terminal (31 - 38) est générée respectivement avec un inventaire de vignettes actives (610), l'inventaire de vignettes actives (610) comprenant une représentation de vignettes actives disponibles mais exclusivement actuellement inactives, non disposées sur les parties de la surface de travail (A) associées au terminal (31 - 38) concerné, et la surface de travail (A) et l'inventaire de vignettes actives étant couplés de telle sorte qu'une vignette active peut être déplacée par l'utilisateur des parties de la surface de travail (A) associées au terminal (31 - 38) concerné dans l'inventaire de vignettes actives (610) et devient ainsi inactive, et **en ce qu'**une vignette active inactive peut être déplacée par l'utilisateur de l'inventaire de vignettes actives (610) sur une partie de la surface de travail (A) associée au terminal (31 - 38) concerné et devient ainsi active.

10. Produit de programme informatique comprenant un support lisible par ordinateur sur lequel est enregistré un code informatique destiné à commander un processeur de telle sorte que le processeur exécute les étapes suivantes en vue de configurer des interfaces utilisateur graphiques (6) pour différents terminaux (31 - 38) :
représentation d'une interface de configuration (81, 81') graphique, laquelle comporte une représentation d'une zone de navigation (61') contenant une représentation miniaturisée d'une surface de travail de l'interface utilisateur graphique (6), l'interface de configuration (81, 81') comportant un catalogue de vignettes actives (K) avec des vignettes actives (W) représenté sous la forme de symboles graphiques ou d'une liste avec des désignations,
acceptation d'instructions de configuration en vue de la sélection de vignettes actives (W) et en vue de disposer les vignettes actives (W) dans la surface de travail (A) par positionnement de représentations miniaturisées des vignettes actives dans la surface de travail représentée miniaturisée, plusieurs zones partielles de navigation (N1, N2, N3) de la zone de navigation de l'interface utilisateur graphique (6) étant représentées, dans lesquelles une partie associée de la surface de travail ainsi que les vignettes actives (W) disposées sur celle-ci sont respectivement représentées miniaturisées,
acceptation d'instructions de configuration en vue de l'association sélective de zones partielles de navigation (N1, N2, N3) aux terminaux (31 - 38), et
configuration des interfaces utilisateur graphiques (6) en vue de représenter sur un afficheur (60) de l'un des terminaux (31 - 38) respectif, en se basant sur les zones partielles de navigation (N1, N2, N3) associées au terminal (31 - 38) concerné et les parties de la surface de travail respectivement associées aux zones partielles de navigation (N1, N2, N3) et les vignettes actives (W) disposées sur celles-ci,
les zones partielles de navigation (N1, N2, N3) étant couplées de telle sorte que dans le cas d'un déplacement d'une vignette active par l'utilisateur de l'une des zones partielles de navigation (N1, N2, N3) dans une autre des zones partielles de navigation (N1, N2, N3), l'admissibilité du positionnement de la vignette active dans l'autre des zones partielles de navigation (N1, N2, N3) est contrôlée conformément à des règles mémorisées, et le déplacement de la vignette active est refusé si l'admissibilité du positionnement de la vignette active dans l'autre des zones partielles de navigation (N1, N2, N3) n'est pas donnée.
